# EUROPEAN PATENT SPECIFICATION

(11) **EP 1 596 231 B1**
(45) Date of publication and mention of the grant of the patent: **04.04.2012**
(21) Application number: 04712748.5
(22) Date of filing: 19.02.2004
(51) Int. Cl.: G02B 6/36

(54) **OPTICAL TRANSMISSION MEDIUM CONNECTING METHOD AND OPTICAL CONNECTING STRUCTURE**
VERBINDUNGSVERFAHREN FÜR EIN OPTISCHES ÜBERTRAGUNGSMEDIUM UND OPTISCHE VERBINDUNGSSTRUKTUR
PROCEDE DE CONNEXION DE SUPPORT DE TRANSMISSION OPTIQUE ET STRUCTURE DE CONNEXION OPTIQUE

(30) Priority: 20.02.2003 JP 2003042430; 10.07.2003 JP 2003194697
(43) Date of publication of application: 16.11.2005
(73) Proprietor: Tomoegawa Co., Ltd., Tokyo 104-8335 (JP)
(72) Inventor: SASAKI, Kyoichi, c/o Tomoegawa Co. Ltd., Shizuoka-shi, Shizuoka 421-0192 (JP); SUZUKI, Masayoshi, c/o Tomoegawa Co. Ltd., Shizuoka-shi, Shizuoka 421-0192 (JP); KOBAYASHI, Tatsushi, c/o Tomoegawa Co. Ltd., Shizuoka-shi, Shizuoka 421-0192 (JP)
(74) Representative: Forstmeyer, Dietmar
(86) International application number: PCT/JP2004/001948
(87) International publication number: WO 2004/074892

(56) References cited:
- WO-A-02/057826
- JP-A- 4 093 905
- JP-A- 8 110 434
- JP-A- 10 268 213
- JP-A- 10 268 213
- JP-A- 2002 122 751
- JP-A- 2002 122 751
- US-A- 5 857 045
- US-A- 5 857 045
- US-A1- 2002 114 582

## Description

### [Technical Field]

This invention relates to a connection method for optical transmission media, optical connection structure, optical transmission medium connection component, and optical circuit component, and more specifically to a connection method for optical transmission media that allows an optical transmission medium to be installed from above and easily aligned with other optical transmission medium, an optical connection structure formed by the connection of optical transmission media using the aforementioned connection method, and an optical transmission medium connection component used for embodying this connection.

### [Prior Art]

As for optical transmission medium connection components, FC, SC, MU and LC type connection components are used for connections involving single-core coated optical fibers, while MPO, MPX and MTP type connection components are used for connections involving multi-core coated optical fibers. In general, these connectors allow for connection of optical fibers by way of butt-connecting two optical fibers in the axial direction (Publications of Unexamined Patent Application Nos. Hei 8-5869 and Hei 8-240746). In the case of a MPO optical connector, for example, optical connector plugs are inserted into an optical connector adapter from two opposing sides, which positions the optical connector plugs inside the internal housing of the optical connector adapter and allows the MT connector ferules attached at the tips of the optical connector plugs to be butt-connected. These push-pull type connectors that enable easy insertion and removal of optical fibers in the axial direction have been proposed. Since these push-pull type connectors allow optical fibers to be inserted and removed in the axial direction of the optical fibers, they can be used to easily connect optical fibers to an adapter mounted on an exterior wall of a device, such as a device's back plane. However, when used on a printed circuit board (such as a motherboard) or inside a device, these connectors do not provide the worker with a clear view of the insertion/removal directions, thus requiring a longer time to complete the connection. Also, the edge of the ferule may contact a sleeve or guide shaft during the insertion, sustaining damage or scratches. In addition, the space on the board or inside the device where the connector is used cannot be utilized effectively, because the layout of other devices must be changed in order to ensure a sufficient space for connector insertion/removal, and in the worst case some devices must be eliminated to make way for the connector. Furthermore, when connecting optical modules on a motherboard or inside a device, the optical fibers must have extra lengths to accommodate fiber movements inside the connector and to improve the ease of connection. Because of these extra lengths required, however, the optical fibers take up a lot of space on the motherboard or inside the device, which makes it necessary to set aside an undue space for connection. Also, if multi-mode optical fibers are used, the optical fibers have unnecessary slacks, etc., and generate excessive modal noise, which has possible significant negative impact on the optical characteristics of the device.

The connectors currently used in general are equipped with a precision-molded ferule or plug that securely accepts an optical fiber, and also with a precision-molded sleeve or guide pin for positioning the connected optical fiber. Since these connectors require a high cost to produce, including the design cost and cost of making production tools, a number of methods to butt-connect optical fibers in a V-groove or through hole have been proposed (such as Publication of Unexamined Patent Application No. 2002-139642). However, installing an optical fiber in a V-groove or through hole would increase the chances of optical fiber damage in the exposed section of the connected optical fiber outside the plug. If a protection member or positioning member is to be provided, the structure would become complex and cancel out the advantage of the V-groove structure, which is to simplify the connection of optical fibers.

The present invention was developed for the purpose of solving the aforementioned problems in the prior arts. In other words, the present invention aims to provide a connection method for optical transmission media and an optical connection structure that allow the worker to easily, without damaging the optical transmission media and in a manner allowing for effective use of the space on a printed circuit board (such as a motherboard) or inside a device, connect together the aforementioned optical transmission media-mainly optical fibers-leading out from the ends of optical elements, optical circuit packages, optical circuit devices, etc., by way of affixing the connection member (plug) with the alignment member (adapter) so that the optical fibers, particularly the stripped bare optical fibers, can be properly positioned.

The JP 10268213 discloses an optical switch provided with a fiber arranging member fixing first optical members to a fiber fixing groove.

The US 2002/0114582 A1 discloses an optical fiber connector with first and second holders for holding first and second connection ends of first and second optical fibers, respectively.

The WO 02/057826 A1 discloses an packaging and interconnect system for fiber and optoelectronic components.

The JP 2002122751 discloses an optical module provided with an optical circuit in which an optical waveguide is formed and a fiber guide having one end face joined to one end face of the optical circuit.

The US 5857045 discloses a splicer for light waveguides with cut recesses.

The object of the invention is to provide a connection concept with improved protection of an optical transmission medium.

This object is achieved by the features of the independent claims.

### [Summary of the invention]

The connection method for optical transmission media as proposed by the present invention comprises a step to place an optical transmission medium on connection member; a step to arrange the connection member on which the optical transmission medium is placed with an alignment member having an alignment groove in such a way that the optical transmission medium placed on the aforementioned connection member faces the opening of the alignment groove in the alignment member; a step to move at least the end to be optically connected of the aforementioned optical transmission medium, into the alignment groove: and a step to butt-connect the end of the option transmission medium in the alignment groove to the end of another optical transmission medium. The aforementioned step to place an optical transmission medium on a connection member is to store the optical transmission medium inside a storage groove in the connection member. The aforementioned step to move at least the end to be optically connected of said optical transmission medium, into the alignment groove, is to move al least the end to be optically connected of the optical transmission medium, from said storage groove into the alignment groove. In the above steps, it is desirable that the connection member on which the optical transmission medium is placed have a storage groove and that the optical transmission medium be placed inside the storage groove.

In the aforementioned connection method proposed by the present invention the optical transmission medium connection component is one that has a connection member having a through hole in the member that opens to the part where an optical transmission medium is placed, and a pressure member used to pressure the optical transmission medium inserted into the aforementioned through hole. When an optical transmission medium is placed, at least the end of the optical transmission medium presses the pressure member inserted into the aforementioned through hole and is consequently pushed out. In this case, the connection member should ideally have a storage groove in which an optical transmission medium is placed, with a through hole opening to the storage groove. Also, the connection member may be equipped with a base having a through hole or cutout into which the pressure member is inserted, and a storage plate having a storage groove in which an optical transmission medium is placed, where the storage groove can have an opening that connects to one end of the storage groove in such a way that the optical transmission medium-being pressed by the pressure member-can be moved through the opening. In addition, the pressure member may have, on its pressure surface, a storage plate with a groove in which an optical transmission medium is stored.

The optical connection structure for optical transmission media as proposed by the present invention is formed in accordance with the aforementioned connection method, comprising: an alignment member having an alignment groove; a connection member on which an optical transmission medium is placed in such a way that the optical transmission medium faces the opening of the aforementioned alignment groove; the aforementioned optical transmission medium, wherein at least the end to be optically connected is stored inside the aforementioned alignment groove in the alignment member; and another optical transmission medium optically connected to the aforementioned optical transmission medium; wherein the end of the optical transmission medium inserted into the alignment groove is butt-connected to the end of another optical transmission medium inside the alignment groove or at the end of the alignment groove. The aforementioned connections member has a storage groove for placing an optical transmission medium. The aforementioned optical transmission medium stored in the aforementioned alignment groove has been moved from the aforementioned connection member into said alignment groove. The aforementioned connection member should ideally have a storage groove in which an optical transmission medium is placed. In the present invention there may be multiple alignment grooves and multiple storage grooves, in which case multiple optical transmission media can he connected through each pair of alignment groove and storage groove

In the aforementioned connection structure, the connection member having a storage groove is one that has a through hole that opens to the storage groove into which a pressure member is inserted, so that the pressure member can move at least the end to be optically connected of the optical transmission medium, into the alignment groove. In addition, in the present invention, the opening width of the alignment groove should ideally he greater than the opening width of the storage groove.

An optical connection structure, optical connector or ether product for connecting optical fibers and other optical transmission media that is obtained by utilizing the connection method proposed by the present invention has an alignment member having an alignment groove, such as a V- groove, used for implementing optical connection, as mentioned above, and it also has a connection member on top that provides a platform on which an optical fiber, etc., is placed. Such optical connection structure or optical connector can have a storage groove for storing an optical fiber, etc., or a means for moving the placed optical fiber, etc., in the direction of the alignment groove, or particularly a pressure means for pushing out the optical fiber, etc. In any way, two connected optical fibers, etc., have a height gap in the connection part. As long as it has these features, a given optical connection structure or optical connector can be easily identified as employing the present invention.

### (Effects of the Invention)

The optical connection method for optical transmission media as proposed by the present invention according to claim 1 and the optical connection structure as proposed by the present invention according to claim 7 have the above structure to allow the connection member to be installed into the alignment member from above, thereby enabling an optical connection of optical transmission media. Therefore, the space on the printed circuit board where the optical connection is made can be effectively utilized. Also, the connection itself can be easily performed from above, thus the work efficiency improves dramatically and it eventually leads to an improved product yield. Also, since no special part is required to improve the positioning accuracy, the number of parts can be kept to a minimum and thus an optical connection can be embodied at low cost.

If the connection member has a storage groove, an optical transmission medium is protected inside the storage groove when a structure housing the optical fiber that leads out of the end of an optical element, optical circuit package, optical circuit device, etc., is connected to another optical fiber on a printed circuit board (such as a motherboard) or inside a device. This eliminates the possibility of the optical transmission medium contacting other member to sustain damage or scratches.

The present invention also has the advantage when optical fibers, particularly stripped bare optical fibers, are optically connected, because when the connection member (plug) is affixed to the alignment member for positioning and connection, each optical fiber can be placed in a V-groove or through hole in a manner preventing damage or scratches. Also, the optical connection method proposed by the present invention allows for an optical connection of optical transmission media by way of installing the connection member to the alignment member from above. Therefore, the space on the printed circuit board where the optical connection is made can be effectively utilized. Also, since the optical transmission medium is protected inside the storage groove, it does not contact other member and sustain damage or scratches at the time of connection. Furthermore, in the case of optically connecting optical fibers, particularly stripped bare optical fibers, each optical fiber can be placed in a V-groove or through hole in a manner preventing damage or scratches when the connection member (plug) is affixed to the alignment member for positioning and connection.

### [Brief Description of the Drawings]

Fig. 1 is a partially exploded side view, explaining an example of the connection method for optical transmission media as proposed by the present invention.
Fig. 2 is a partially exploded side view, explaining another example of the connection method for optical transmission media as proposed by the present invention.
Fig. 3 is an oblique view of an example of the connection member used in the connection method illustrated in Fig. 1.
Fig. 4 is an oblique view of an example of the connection member used in the connection method illustrated in Fig. 2.
Fig. 5 is an oblique view of an example of the alignment member used in the connection methods illustrated in Figs. 1 and 2.
Fig. 6 is an oblique view of an example of the connection member used in the connection method proposed by the present invention.
Fig. 7 is a process step drawing explaining the connection method when the connection member shown in Fig. 6 is used.
Fig. 8 is an oblique view of another example of the connection member used in the connection method proposed by the present invention.
Fig. 9 is a drawing explaining the relationship of the alignment groove width and storage groove width.
Fig. 10 is a drawing explaining another example of the connection method proposed by the present invention.
Fig. 11 is a section view explaining a condition where the connection member is engaged with the alignment member.
Fig. 12 is a partially exploded side view, explaining an example of the connection method for optical transmission media as proposed by the present invention.
Fig. 13 is a partially exploded side view, explaining an example of the connection method for optical transmission media as proposed by the present invention.
Fig. 14 is a partially exploded side view, explaining an example of the connection method for optical transmission media as proposed by the present invention.
Fig. 15 is an oblique view of an example of the optical connection structure proposed by the present invention.
Fig. 16 is an oblique view of an optical waveguide used in the present invention and an example of optical connection structure using the waveguide.
Fig. 17 is a partially exploded side view, explaining an example of the connection method for optical transmission media as proposed by the present invention.
Fig. 18 is an oblique view and partially exploded side view of an example of the optical connection structure proposed by the present invention.
Fig. 19 is an oblique view of an example of alignment member that uses a positioning member.
Fig. 20 is a partially exploded side view, explaining how an optical connection structure is formed using the alignment member shown in Fig. 19.
Fig. 21 is an oblique view of an example of connection member that uses a positioning member.
Fig. 22 is a partially exploded side view, explaining how an optical connection structure is formed using the connection member shown in Fig. 21.
Fig. 23 is a drawing that explains an example of the positioning method, where (a) is an oblique view of the alignment member, while (b) explains the positioning method using this alignment member.
Fig. 24 is a general structural drawing of an optical circuit component that utilizes the optical connection structure proposed by the present invention.
Fig. 25 is an oblique view of the connection member and alignment member used in Example 1.
Fig. 26 provides section views of the optical transmission connection component and optical connection structure in Example 1.
Fig. 27 is a partially exploded side view, explaining the process steps of the optical connection structure and connection method in Example 1.
Fig. 28 is an oblique view of the connection member and alignment member used in Example 2.
Fig. 29 is a partially exploded side view, explaining the process steps of the optical connection structure and connection method in Example 2.
Fig. 30 is an oblique view and front assembly drawing, explaining the structure of the connection member used in Example 3.
Fig. 31 is an oblique view of the four-core plastic V-groove base used in the alignment member in Examples 4 to 6.
Fig. 32 is an oblique view of the alignment member in Examples 4 to 6.
Fig. 33 is a partially exploded side view, explaining the process steps of the optical connection structure and connection method in Example 4.
Fig. 34 is an oblique view of the connection member used in Example 5.
Fig. 35 is an oblique view of the pressure member used in Example 6.
Fig. 36 is a partially exploded side view, explaining the process steps of the optical connection structure and connection method in Example 6.
Fig. 37 is a partially exploded side view, explaining the process steps of the optical connection structure and connection method in Example 7.
Fig. 38 is an oblique view of the connection member and alignment member used in Example 8.
Fig. 39 provides section views of the optical transmission connection component and optical connection structure in Example 8.
Fig. 40 is a partially exploded side view, explaining the process steps of the optical connection structure and connection method in Example 9.
Fig. 41 is an oblique view of the connection member and alignment member used in Example 9.
Fig. 42 is a partially exploded side view, explaining the process steps of the optical connection structure and connection method in Example 9.

### (Description of the Symbols)

1 --- Optical transmission medium, 2 --- Connection member, 3 --- Storage groove, 4Alignment member, 5 --- Alignment groove, 6 --- Through hole, 7 --- Pressure member, 8Affixing location, 9 --- Cutout, 10 --- Optical connection structure, 11 --- Optical fiber, 12Magnetic film, 13 --- Magnetic force, 14 --- Latch, 15 --- Latch engagement part, 16Through hole member, 17 --- Optical waveguide base, 18 --- Optical waveguide, 19 --- Rod lens, 20 --- Optical module, 21 --- Printed circuit board, 22, 23 --- Positioning members, 24Positioning hole, 25 --- Board, 28 --- Optical component, 30 --- Through hole, 31Connection member, 32 --- Storage groove, 33 --- Alignment member, 34 --- Alignment groove, 35 --- Pressure jig, 35a --- Convex end, 36 --- Urethane foam resin, 37 --- Coated optical fiber, 38 --- Bare optical fiber, 39 --- Latch, 40 --- Affixing member, 41 --- Connection member base, 42 --- Through hole, 43 --- Latch, 44 --- Optical fiber storage plate, 45V-groove, 46 --- Opening, 50 --- Alignment member, 51 --- Acrylic resin base, 52 --- Latch engagement part, 53 --- Four-core plastic V-groove base, 54 --- Alignment groove, 60Connection member, 61 --- Storage groove, 62 --- Through hole, 63 --- Latch, 64 --- Four-core optical fiber tape, 65 --- Four-core plastic V-groove base

### [Best Mode for Carrying Out the Invention]

Examples of the present invention are explained below by referring to the drawings.

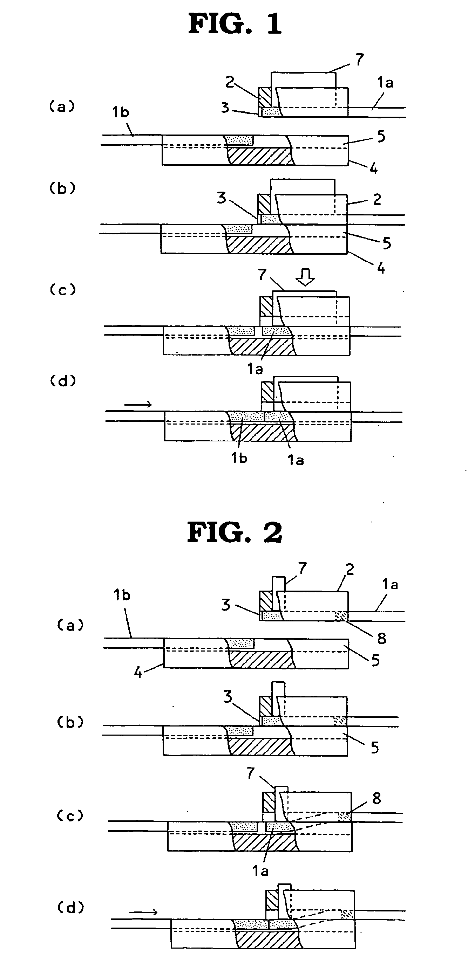

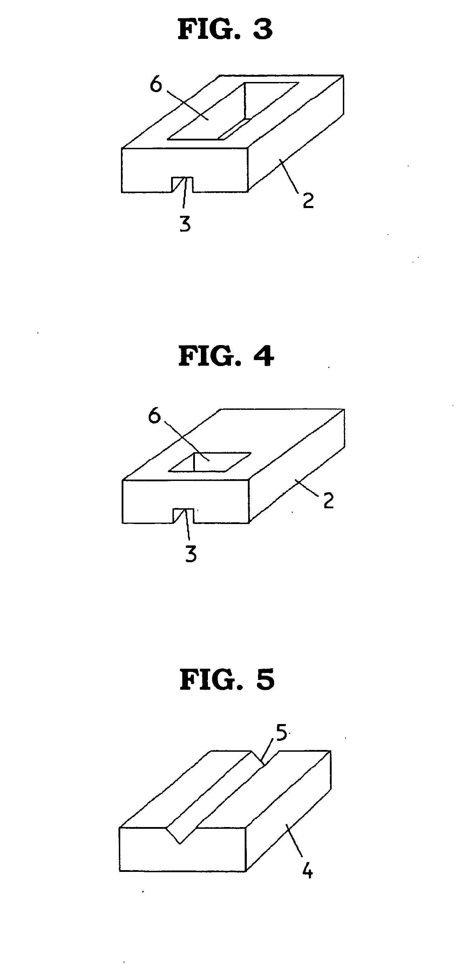

Figs. 1 and 2 explain an overview of the connection method for optical transmission media as proposed by the present invention. Fig. 1 indicates the steps of moving the entire optical transmission medium from the storage groove into the alignment groove, while Fig. 2 indicates the steps of moving the end of the optical transmission medium from the storage groove into the alignment groove. Fig. 3 is an oblique view of an example of the connection member used in the connection method illustrated in Fig. 1, while Fig. 4 is an oblique view of an example of the connection member used in the connection method illustrated in Fig. 2. Fig. 5 is an oblique view of an example of the alignment member used in the connection methods illustrated in Figs. 1 and 2.

The connection member (2) in Figs. 3 and 4 has a storage groove (3) in which to place an optical transmission medium, and a through hole (6) that opens to the storage groove. This through hole accepts a pressure member, which is inserted into the through hole in order to press the optical transmission medium placed in the storage groove. On the other hand, the alignment member (4) in Fig. 5 has an alignment groove (5) (having a V-shaped cross-section in the figure), on one surface of which an optical transmission medium is placed.

In Fig 1, first an optical transmission medium (1a) (such as an optical fiber) is placed inside the storage groove (3) in the connection member (2). In this case, the optical transmission medium placed in the storage groove (3) must be affixed to the extent that it will not detach from the storage groove during the connection operation. This level of affixing can be achieved by an appropriate method, such as contact friction with the storage groove or temporary bonding. On the other hand, another optical transmission medium (1b) to be connected to the aforementioned optical transmission medium is placed inside the alignment groove (5) in the alignment member (4) (Fig. 1 (a)).

Next, the alignment member (4) and connection member (2) are placed in such a way that the opening of the storage groove (3) in the connection member faces the opening of the alignment groove (5) in the alignment member (Fig. 1 (b)). Then, the optical transmission medium (1a) is pressed by the pressure member (7) inserted into the through hole in the connection member, to be moved from the storage groove into the alignment groove (Fig. 1 (c)). Thereafter, the optical transmission medium (1b) placed inside the alignment groove in the alignment member is moved in the direction of the arrow so that its end is butt-connected to the end of the optical transmission medium (1a) that has been moved into the alignment groove earlier. This completes the connection. Finally, the connection member and alignment member are affixed by an appropriate means (not illustrated), such as adhesive, or by using a latch provided on the connection member and a latch engagement part provided on the alignment member (this latch mechanism is explained later). This forms the optical connection structure proposed by the present invention (Fig. 1 (d)).

In Fig. 2, first an optical transmission medium (1a) is placed inside the storage groove (3) in the connection member (2) shown in Fig. 4, and affixed to the connection member (2) at the affixing location (8) (Fig. 2 (a)). This affixing can be achieved by any means, such as adhesive. Next, as in Fig. 1, the alignment member housing another optical transmission medium (1b) in the alignment groove (5) is placed with the aforementioned connection member in such a way that the opening of the storage groove (3) in the connection member faces the opening of the alignment groove (5) in the alignment member (Fig. 2 (b)). Thereafter, the optical transmission medium (1a) is pressed by the pressure member (7) to be moved from the storage groove into the alignment groove. In Fig. 2, the affixing location (8) of the optical transmission medium is affixed to the connection member, while only the end of the optical transmission medium (1a) is pressed by the pressure member, thus causing the end of the optical transmission medium to move into the alignment groove (Fig. 2 (c)). Next, the optical transmission medium (1b) placed inside the alignment groove in the alignment member is moved in the direction of the arrow so that its end is butt-connected to the end of the optical transmission medium (1a) that has been moved into the alignment groove earlier. This completes the connection. Finally, the connection member and alignment member are affixed by an appropriate means (not illustrated) to form the optical connection structure proposed by the present invention (Fig. 2 (d)).

In the aforementioned connection method illustrated in Fig. 2, the optical transmission medium connection structure formed in accordance with the present invention has one part of the optical transmission medium affixed to the connection member so that the optical transmission medium does not detach from the connection member. In addition, the elasticity of the optical transmission medium is used to project and store the optical transmission medium, which reduces the number of parts required and therefore embodies a low-cost connection component.

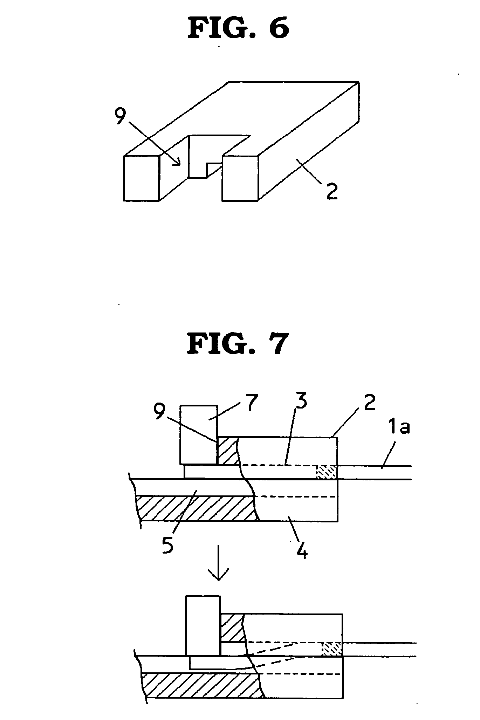

In the aforementioned connection method illustrated in Fig. 2, a connection member (2) having a cutout (9) at its end, as shown in Fig. 6, can be used instead of a connection member having a through hole. In this case, as shown in Fig. 7, the pressure member (7) is inserted into the cutout (9), and then the end of the optical transmission medium (1a) is pressed and thus moved from the storage groove (3) in the connection member (2) into the alignment groove (5) in the alignment member (4).

The connection member used in the present invention is not limited to any specific material or shape. As for its material, plastic, ceramic and metal can be suitably used. As for the cross-section shape of the storage groove, square, semi-circle and V shape are preferred, although any other shape will also do as long as the groove can stably store an optical transmission medium such as an optical fiber. There are no limitations on the number of storage grooves, and there can be only one storage groove or multiple storage grooves.

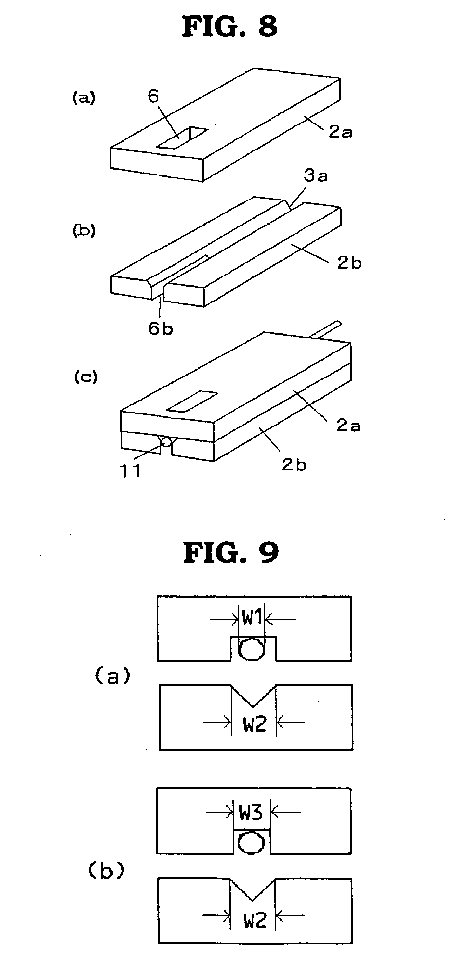

The connection member comprises a base having a through hole or cutout into which the pressure member is inserted, and a storage plate having a storage groove in which an optical transmission medium is placed; wherein the aforementioned storage groove can have an opening on one end that allows the optical transmission medium to move via the pressure from the pressure member. Fig. 8 shows an example of this connection member. Fig. 8 (a) is the connection member base, Fig. 8 (b) is the storage plate, and Fig. 8 (c) illustrates a condition where an optical fiber is stored in the storage plate and affixed to the base. The connection member base (2a) has a through hole (6) into which the pressure member is inserted. In the storage plate (2b), a storage groove (3a) with a given cross-section shape, such as V shape, is formed to store an optical fiber. This storage groove has an opening (6b) at one end of the storage groove, so that the optical fiber can move through the opening via pressure. In the case of this pressure member, an optical fiber (11) is stored in the storage groove, after which the storage plate (2b) is affixed to the connection member base (2a) using adhesive.

The alignment member used in the present invention is not limited to any specific material or shape. As for its material, plastic, ceramic and metal can be suitably used. As for the cross-section shape of the alignment groove, square, semi-circle and V shape are preferred, although any other shape will also do as long as the groove can properly position an optical transmission medium for connection. There are no limitations on the number of alignment grooves, and there can be only one alignment groove or multiple alignment grooves. In the present invention, there is no need to match the number of storage grooves with that of alignment grooves, and there is no need to match the numbers of these grooves with the number of optical transmission media, either. The only condition is that the number of alignment grooves should be equal to or greater than the numbers of storage grooves and optical transmission media.

The alignment member can also have a combined structure, comprising a base and a plastic plate with an alignment groove attached on the base.

The optical transmission medium to which the connection method proposed by the present invention is applied can be any medium that seals in and transmits light. Its material is not limited and any material capable of transmitting light can be used, such as quartz, soda glass and plastic. The optical transmission medium can have a cylindrical shape, as in the case of an optical fiber or rod lens, or a plate shape, as in the case of a flat optical waveguide. However, the optical transmission medium must be accommodated inside the storage groove in the connection member, and in this sense an optical fiber, rod lens or optical waveguide is preferred, and in particular an optical fiber is most preferred. In the present invention, the optical transmission media to be inter-connected need not be of the same type, and optical transmission media of different types can be connected together. Specifically, an optical fiber can be used as the optical transmission medium placed inside the storage groove in the connection member, and this optical fiber can be connected to another optical fiber or to a rod lens or optical waveguide.

The storage groove and alignment groove need to be aligned with a certain level of accuracy so that the optical transmission medium can move. In this case, it is desirable to make the opening width (W2) of the alignment groove larger than the width (W1) of the optical transmission medium, as shown in Fig. 9 (a), and it is particularly desirable to make the opening width (W2) of the alignment groove larger than the opening width (W3) of the storage groove, as shown in Fig. 9 (b). This way, the optical transmission medium does not contact the opening of the alignment groove and sustain damage. As a result, optical transmission media can be inter-connected in simple connection steps without requiring high levels of processing accuracy or positioning accuracy for each part.

The aforementioned pressure member that comprises the optical transmission connection member in the present invention by way of being inserted into the through hole or cutout in the connection member is not limited to any specific material, shape, etc., and any specification can be employed as long as the optical transmission medium is not damaged. Among others, plastic, metal and rubber can be suitably used as the material for the pressure member. It is also permissible to use a combined structure, such as one in which rubber material is used only for the part contacting the optical transmission medium, with all other parts of the pressure member made of plastic. Also, the tip of the pressure member inserted into the through hole or cutout in the connection member can be bonded to the optical transmission medium using adhesive. Furthermore, a storage plate having a storage groove can be affixed using adhesive to the tip (pressure surface) of the pressure member inserted into the through hole or cutout in the connection member. By using the pressure member of any of the above constructions, an optical transmission component can be easily positioned and affixed in the alignment groove by a mechanical means, and the optical transmission medium can be kept connected in a stable manner.

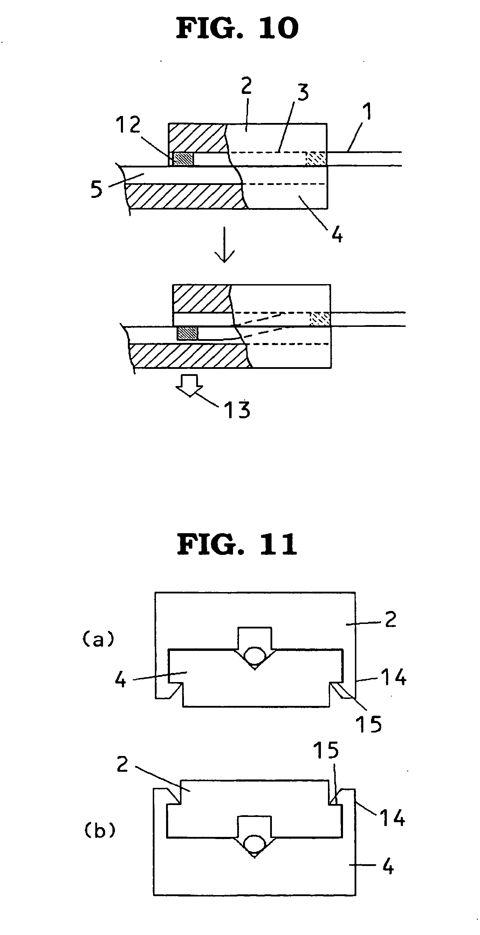

In Figs. 1 and 2 explained earlier, the pressure member was used as a means for moving the optical transmission medium from the storage groove in the connection member into the alignment groove in the alignment member. However, other means can also be used for moving the optical transmission medium from the storage groove in the connection member into the alignment groove in the alignment member. For example, magnetic force can be used, as explained below, or the optical transmission medium can be physically pushed or pulled to achieve a desired movement. Fig. 10 shows an example of how this movement can be achieved using magnetic force. Specifically, an area around the end of an optical transmission medium (1) is covered with a magnetic film (12) made of metal or other material. The optical transmission medium is then placed inside the storage groove (3) in the connection member (2) in such a way that the opening of the storage groove faces the opening of the alignment groove (5) in the alignment member (4), as shown in Fig. 2 above, after which a magnetic field is applied to cause the end of the optical transmission medium to be pulled, by magnetic force (13), into the alignment groove in the alignment member, thus achieving the desired movement of the optical transmission media into the alignment groove.

In the present invention, the connection member and alignment member are finally affixed to each other, but when and how they are affixed are not specified. To achieve a permanent connection, the connection member and alignment member can be bonded using adhesive, etc. In this case, any adhesive can be used for affixing the two members, including pressure-sensitive adhesives (viscous adhesives), thermoplastic adhesives, heat-curing adhesives or UV-curing adhesives, such as urethane, acrylic, epoxy, nylon, phenol, polyimide, vinyl, silicone, rubber, fluorinated epoxy, fluorinated acrylic and fluorinated polyimide adhesives. From the viewpoint of handling ease, however, UV-curing adhesives and thermoplastic adhesives are particularly suitable. Then again, use of a mechanical affixing means is preferred so that the optical transmission media can be disconnected and reconnected. For example, it is possible to provide a latch (14) on the connection member (2) and a latch engagement part (15) on the alignment member (4), as shown in Fig. 11 (a), or provide a latch engagement part (15) on the connection member (2) and a latch (14) on the alignment member (4), as shown in Fig. 11 (b), and engage the latch and latch engagement part. The latch and latch engagement part can have any known shapes and they can be engaged by known means. The latch can also be integrally formed with the connection member or alignment member, or the latch can be made by a different material and assembled with the connection member or alignment member.

The connection member is installed to the alignment member from above in both of the aforementioned figures. However, it is perfectly acceptable to have the connection member installed from below or side of the alignment member.

When butt-connecting optical transmission media, the end face of each optical transmission medium should receive a pressuring force. This pressuring force can be applied by using any existing method. For example, a pressuring force can be applied in the direction of the center axis of the optical transmission medium so that the optical transmission medium can move, or a pressuring force can be applied on the connection member to which the optical transmission medium is affixed so that the connection member moves to indirectly pressurize the optical transmission medium in the direction of the center axis of the optical transmission medium. This pressuring force should ideally be generated by utilizing a plate spring installed to the connection member or alignment member or the elasticity of resin or other material.

It is also possible to apply a refractive-index alignment agent between the inter-connected optical transmission media before butt-connecting the ends of the optical transmission media. There are no limitations on the material, state or application method of this refractive-index alignment agent. As for its material, any material appropriate for the refractive index and material of the optical fiber used can be selected. For example, silicone oil and silicone grease are suitable for this purpose. As for the state of the refractive-index alignment agent, it can be solid, oil, grease, gel or film.

Next, variations of the connection method for optical transmission media as proposed by the present invention are explained.

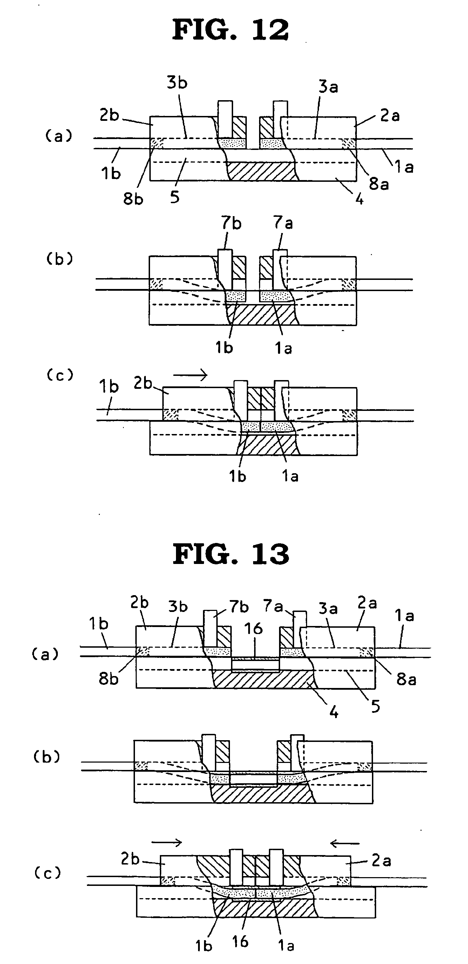

Figs. 12 and 13 show yet other examples of the connection method for optical transmission media as proposed by the present invention. In both figures, optical transmission media placed on two connection members are inter-connected. In Fig. 12, optical transmission media (1a, 1b) are placed inside the respective storage grooves (3a, 3b) provided in two connection members (2a, 2b) and affixed to the connection members (2) at the affixing locations (8a, 8b) in the same manner as shown in Fig. 2. Next, the connection members (2a, 2b) on which the optical transmission media are placed are placed with an alignment member (4) in such a way that the openings of the storage grooves (3a, 3b) in the connection members face the openings of an alignment groove (5) in an alignment member (Fig. 12 (a)). Thereafter, the respective optical transmission media (1a, 1b) are pressed by pressure members (7a, 7b) so that the end of each optical transmission medium moves from the storage groove into the alignment groove (Fig. 12 (b)). Next, one connection member (2b in the figure) is moved to the direction of the arrow, and the end of one optical transmission medium (1b in the figure) that has been placed inside the alignment groove in the alignment member is butt-connected to the end of the other optical transmission medium (1a). This completes the connection. Finally, the connection member and alignment member are affixed by an appropriate means (not illustrated) to form the optical connection structure proposed by the present invention (Fig. 12 (c)).

In Fig. 13, optical transmission media placed on two connection members are inter-connected, just like in Fig. 12. The difference is that a through hole is provided in one part of the alignment groove in the alignment member, and the optical transmission media are butt-connected in this through hole to achieve optical connection. Specifically, a through hole member (16) having a through hole is provided at the center of the alignment groove (5) in the alignment member (4). First, optical transmission media (1a, 1b) are placed inside the respective storage grooves (3a, 3b) provided in two connection members (2a, 2b) and affixed to the connection members (2a, 2b) at the affixing locations (8a, 8b). Next, the connection members (2a, 2b) on which the optical transmission media are placed are placed with an alignment member (4) in such a way that the openings of the storage grooves (3a, 3b) in the connection members face the openings of an alignment groove (5) in an alignment member (Fig. 13 (a)). Thereafter, the ends of the respective optical transmission media (3a, 3b) are pressed by pressure members (7a, 7b) so that the end of each optical transmission medium moves from the storage groove into the alignment groove (Fig. 13 (b)). Next, the connection members (2a, 2b) are moved to the directions of the arrows to cause the ends of the optical transmission media placed inside the alignment groove in the alignment member to be butt-connected inside the through hole in the through hole member (16). This completes the connection. Finally, the connection member and alignment member are affixed by an appropriate means (not illustrated) to form the optical connection structure proposed by the present invention (Fig. 13 (c)).

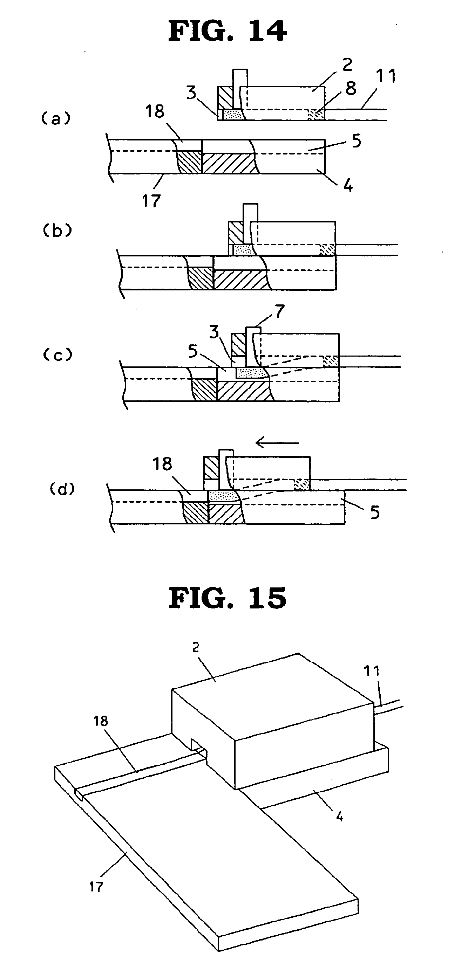

Figs. 14 through 17 explain yet other variations of the connection method for optical transmission media as proposed by the present invention. In these examples, optical transmission media of different types are inter-connected.

Specifically, Fig. 14 explains connection between an optical fiber and optical waveguide, while Fig. 15 is an oblique view of an optical connection structure (Fig. 14 (d)) formed in accordance with the connection method illustrated in Fig. 14. First, an optical fiber (11) is placed inside a storage groove (3) in a connection member (2). The affixing location (8) of the optical fiber is affixed to the storage groove using adhesive, for example. On the other hand, an optical waveguide (18) provided on an optical waveguide base (17) is aligned with an alignment groove (5) in an alignment member (4) (Fig. 14 (a)). These connection member (2) and alignment member (4) are placed in such a way that the opening of the storage groove faces the opening of the alignment groove (Fig. 14 (b)), and a pressure member (7) is caused to move the end of the optical fiber from the storage groove (3) into the alignment groove (5) (Fig. 14 (c)). Next, the connection member is moved to butt-connect the end of the optical fiber to the optical waveguide that has been aligned with the alignment groove (5) (Fig. 14 (d)), and finally the members are affixed by an appropriate means to form an optical connection structure comprising the optical fiber and optical waveguide (Fig. 15).

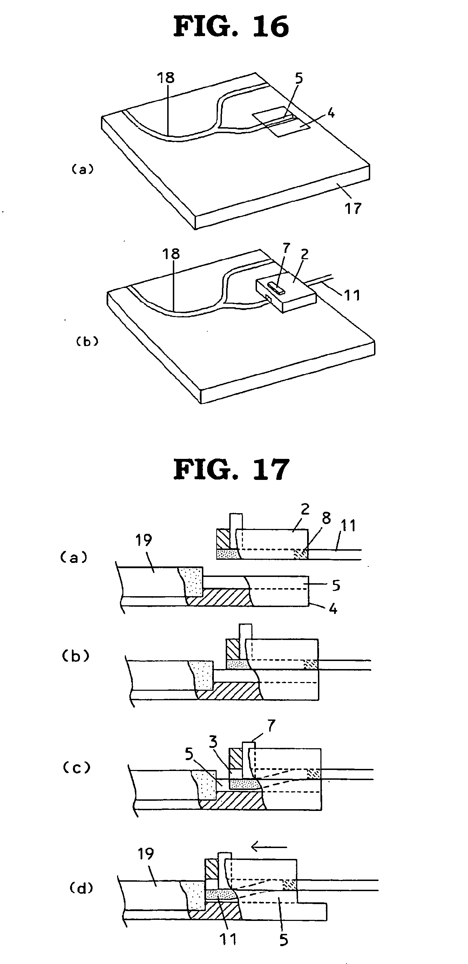

In Fig. 16, an alignment member (4) having an alignment groove (5) is integrally formed on an optical waveguide base (17) (Fig. 16 (a)). In this case, a connection member (2) is placed on top of the alignment member (4) having the alignment groove (5), and the affixing location of an optical fiber is affixed in a storage groove using adhesive, for example. Next, a pressure member (7) is caused to move the tip of the optical fiber (11) into the alignment groove (5), and the members are affixed by an appropriate means to form an optical connection structure comprising the optical fiber (11) and optical waveguide (18) (Fig. 16 (b)).

Fig. 17 explains connection between an optical fiber and a rod lens. First, an optical fiber (11) is placed inside a storage groove (3) in a connection member (2), and an affixing location (8) of the optical fiber is affixed in the storage groove using adhesive, for example. On the other hand, a rod lens (19) is affixed on an alignment member (4) in such a way that the rod lens is aligned with an alignment groove (5) in the alignment member (Fig. 17 (a)). The aforementioned connection member (2) and alignment member (4) are positioned in such a way that the opening of the storage groove faces the opening of the alignment groove (Fig. 17 (b)), and a pressure member (7) is caused to move the end of the optical fiber from the storage groove (3) into the alignment groove (5) (Fig. 17 (c)). Next, the connection member is moved to cause the end of the optical fiber (11) to be butt-connected to the rod lens (19) that has been aligned with the alignment groove (5) (Fig. 17 (d)), and finally the members are affixed by an appropriate means to form an optical connection structure comprising the optical fiber and rod lens.

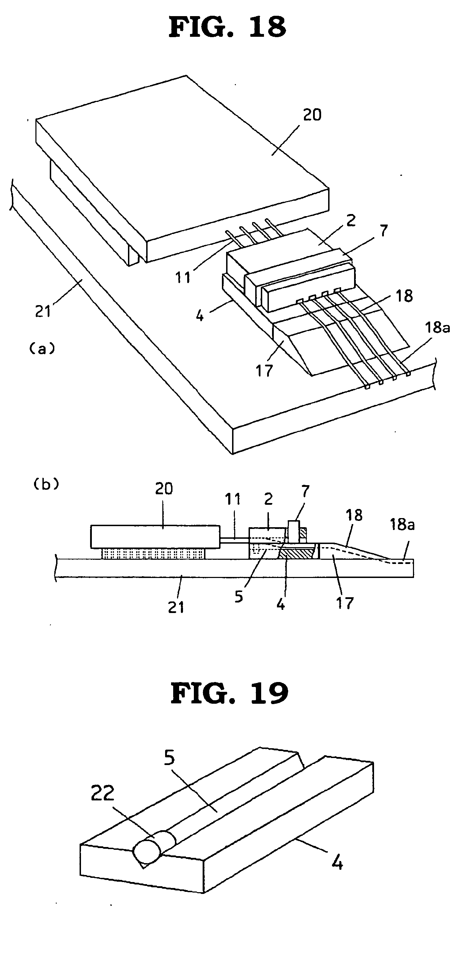

The optical connection method proposed by the present invention can also be used for connection of an optical transmission medium installed in an optical module with another optical transmission medium installed in a different optical module or printed circuit board. Fig. 18 (a) is an oblique view showing how the optical connection method proposed by the present invention can be applied to connect optical fibers leading out of an optical module to optical waveguides installed on a printed circuit board, while Fig. 18 (b) is a partially exploded side view illustrating this application. In the figure, multiple optical fibers (11) (four optical fibers are shown in the figure) leading out of an optical module (20) are placed inside storage grooves in a connection member (2), and the connection member (2) is installed onto an alignment member (4) provided on a printed circuit board (21), in such a way that the openings of the storage grooves face the openings of alignment grooves (5) in the alignment member. Next, a pressure member (7) is caused to move the end of each optical fiber (11) from the storage groove in the connection member (2) into the alignment groove (5) in the alignment member (4), and then butt-connected to each optical waveguide (18) provided on an optical waveguide base (17) placed on the printed circuit board (21), thus forming an optical transmission connection structure. This way, the optical fibers (11) from the optical module (20) are connected on the alignment member (4) with the optical waveguides (18a) on the printed circuit board (21). In this case, the connection member may be integrated with another component, such as an optical module, and the exposed parts of the optical fibers shown in Fig. 18 can be entirely covered and thereby protected by the connection member.

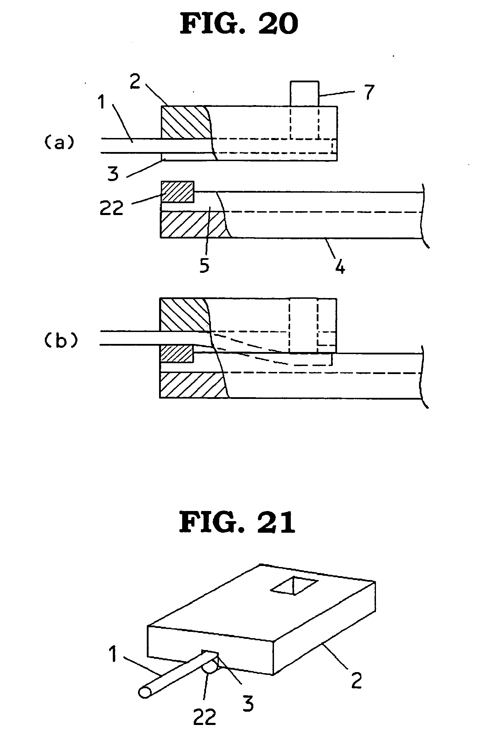

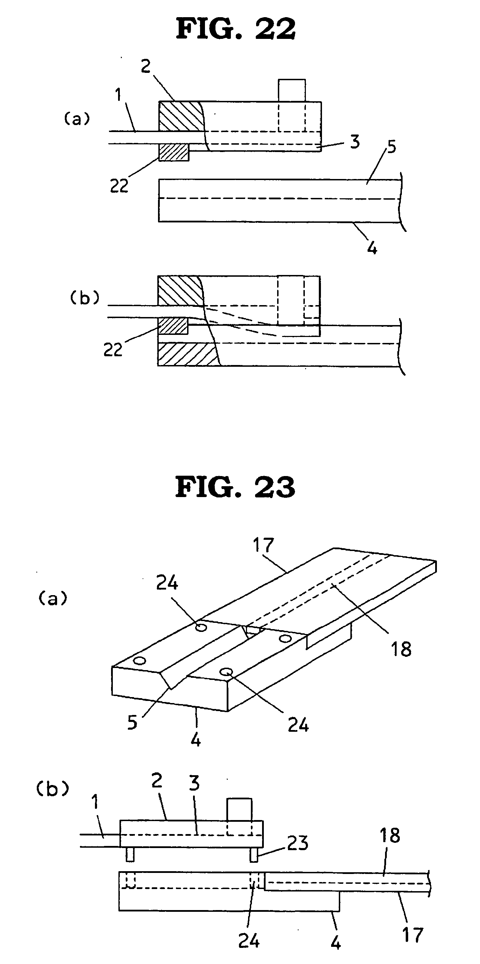

In the optical connection method proposed by the present invention, there are no limitations as to how the storage groove in the connection member should be aligned with the alignment groove in the alignment member. The grooves can be positioned directly, or they can be positioned indirectly by way of positioning the outer profiles of the connection member and alignment member. Figs. 19 through 22 explain positioning methods. For example, if a positioning member (22) is installed inside the alignment groove (5) in the alignment member (4) (Fig. 19), and the connection member (2) in which an optical transmission medium (1) is placed is installed to the alignment member (4), the positioning member (22) can be fitted into the storage groove (3) to align the opening of the storage groove (3) with the opening of the alignment groove (5) (Fig. 20 (a), (b)). On the contrary, if a positioning member (22) is installed inside the storage groove (3) in the connection member (2) in which an optical transmission medium (1) is placed (Fig. 21), fitting the positioning member (22) into the alignment groove (5) when the connection member (2) is installed to the alignment member (4) will align the opening of the storage groove (3) with the opening of the alignment groove (5) (Fig. 22 (a), (b)). Furthermore, it is also possible, for example, to provide a positioning member (23) on the connection member (2) and a positioning hole (24) in the alignment member (4), as shown in Fig. 23 (a) and (b). In this case, inserting the positioning member (23) into the positioning hole (24) when the connection member is placed on the alignment member will align the opening of the storage groove (3) with the opening of the alignment groove (5). In Fig. 23, an optical waveguide base (17) is placed on the alignment member (4) and an optical waveguide base (18) is aligned with the alignment groove (5).

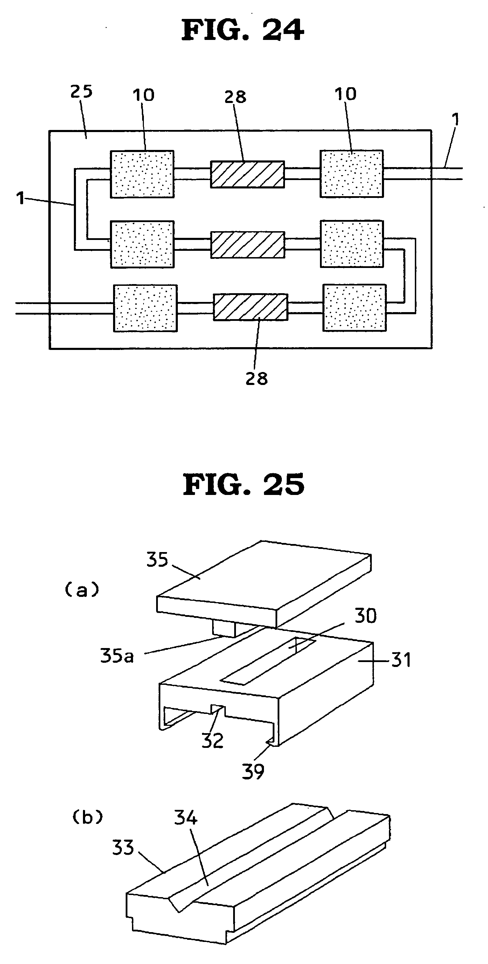

Fig. 24 is a general structural drawing of an optical circuit component that utilizes the optical connection structure proposed by the present invention. Three optical components (28) are inter-connected on a base (25) by an optical transmission medium (1) based on an optical connection structure (10) conforming to the present invention. By arranging multiple units of this optical connection structure (10) in parallel, a compact circuit design can be achieved.

### (Examples)

Specific examples of the present invention are explained below. Note, however, that the present invention is not limited to these examples.

### Example 1

Two units of a connection member (31) (size: 5 mm x 12 mm x 3 mm) that has a storage groove (32) with a cross-section of 0.26 mm x 0.26 mm and an acrylic resin latch (39) having a rectangular through hole of 1 mm x 8 mm (30) running through the storage groove, as shown in Fig. 25 (a), two units of a pressure jig (35) having silicone rubber with a thickness of 1 mm attached at its convex edge (35a), also shown in Fig. 25 (a), and one alignment member (33) (size: 5 mm x 28 mm x 3 mm) that has a V-shaped alignment groove (34) with an equilateral triangle cross-section where the length of one side is 0.3 mm, as shown in Fig. 25 (b), were prepared.

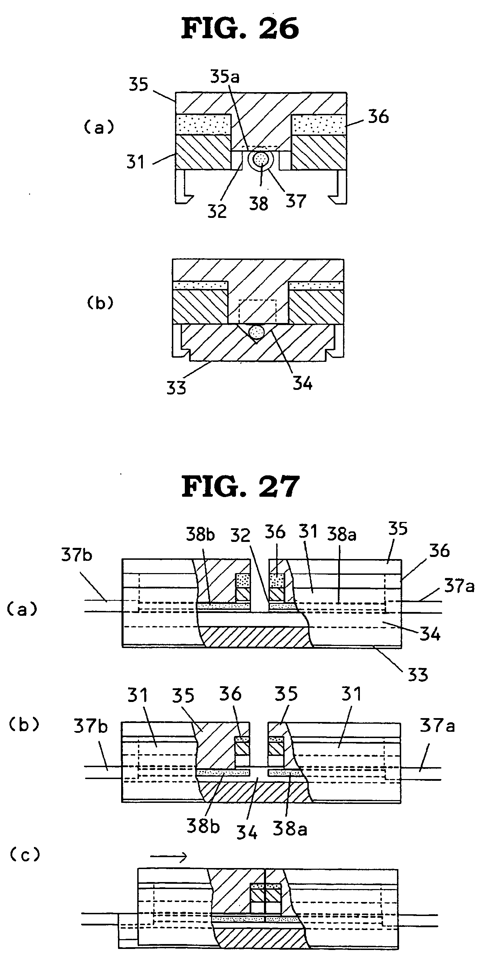

As shown in Fig. 26 (a), the pressure jig (35) was inserted into the rectangular through hole in the connection member (31), and affixed to the connection member (31) via urethane foam resin (36) to form an optical transmission connection member. Then, the cover of a coated optical fiber (37) (manufactured by Furukawa Electric; diameter 250 µm) was stripped by 15 mm from one end, and the bare optical fiber (38) (diameter 125 µm) was cut at 10 mm from the end of the cover. The coated optical fiber (37) was placed inside the storage groove (32) in the connection member (31), and affixed to a convex end (35a) of the pressure jig (35) using silicone adhesive (Fig. 26 (a)).

The connection was made as follows. As shown in Fig. 27, the alignment groove (34) in the alignment member (33) was aligned with the storage groove (32) in the aforementioned connection member (31) to install the connection member on the alignment member (33) (Fig. 27 (a)). Next, a load was applied in the downward direction using the pressure jig (35). This caused the urethane foam resin (36) to deform, which then caused both the coated optical fibers (37a, 37b) and bare optical fibers (38a, 38b) to be pushed into the alignment groove (34), eventually aligning the cross-sections of the bare optical fibers installed in the two connection members (31) (Fig. 27 (b)). Next, the two connection members (31) were butt-connected to each other to butt-connect the bare optical fibers (38a, 38b), thus forming an optical connection structure conforming to the present invention (Fig. 27 (c), Fig. 26 (b)).

The obtained optical connection structure was formed by installing the connection members from above, so the work space required on the board could be reduced. Also, because each optical fiber was stored in the storage groove, when each connection member was bonded to the mating alignment member the optical fiber did not sustain damage and the optical fibers could be inter-connected easily. Furthermore, it was found that the desired processing and positioning effects would be sufficiently achieved even with a resin subject to large heat shrinkage/deformation, such as acrylic resin.

When the connection loss was measured at the connection point, the measured value was 0.2 dB or less. This proved sufficient utility of this structure as an optical connection structure.

### Example 2

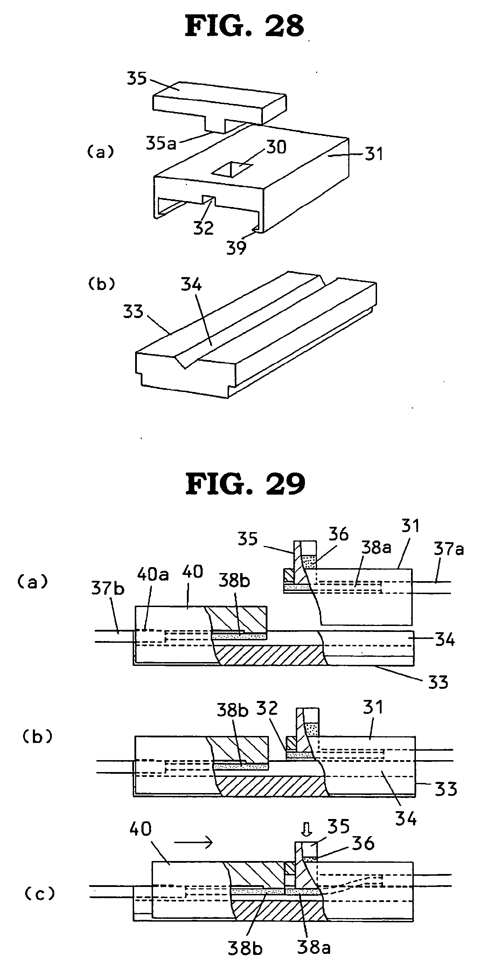

One connection member (31) (size: 5 mm x 12 mm x 3 mm) that has a storage groove (32) with a cross-section of 0.26 mm x 0.26 mm and an acrylic resin latch (39) having a rectangular through hole of 1 mm x 3 mm (30) running through the storage groove, as shown in Fig. 28 (a), one pressure jig (35) having silicone rubber with a thickness of 0.5 mm attached at its convex edge, also shown in Fig. 28 (a), and one alignment member (33) (size: 5 mm x 28 mm x 3 mm) that has a V-shaped alignment groove (34) with an equilateral triangle cross-section where the length of one side is 0.4 mm, as shown in Fig. 28 (b), were prepared. The connection member (31) and pressure jig (35) were affixed using urethane foam resin (36). Then, the cover of a coated optical fiber (37a) (manufactured by Furukawa Electric; diameter 250 µm) was stripped by 15 mm from one end, and the bare optical fiber (38a) (diameter 125 µm) was cut at 10 mm from the end of the cover. The coated optical fiber (37a) was placed inside the storage groove (32) in the connection member (31), and the cover of the coated optical fiber (37a) was affixed to the connection member using acrylic adhesive.

The connection was made as follows. As shown in Fig. 29, the coated optical fiber (37b) that had been stripped and cut was placed inside the alignment groove (34) in the alignment member (33) in the same manner as explained above, and affixed using an affixing member (40) having a latch structure similar to the one on the aforementioned connection member (Fig. 29 (a)). Specifically, one part (40a) of the coated optical fiber was bonded to the affixing member using adhesive. Next, the alignment groove (34) in the alignment member (33) was aligned with the storage groove (32) in the connection member (31), and the connection member (31) was installed to the alignment member (33) (Fig. 29 (b)). Thereafter, a load was applied in the downward direction using the pressure jig (35). This caused the urethane foam resin (36) to deform, which then caused the bare optical fiber (38a) to be pushed into the alignment groove, eventually aligning the cross-section of the bare optical fiber (38a) installed on the connection member with another bare optical fiber (38b) placed inside the alignment groove in the alignment member. Next, the affixing member (40) was moved to butt-connect the bare optical fibers (38a, 38b), thus forming an optical connection structure conforming to the present invention (Fig. 29 (c)).

The obtained optical connection structure was formed by installing the connection member from above, so the work space required on the board could be reduced. Also, because the optical fiber was stored in the storage groove, when the connection member was bonded to the alignment member the optical fiber did not sustain damage and the bare optical fibers could be inter-connected easily. Furthermore, it was found that the desired processing and positioning effects would be sufficiently achieved even with a resin subject to large heat shrinkage/deformation, such as acrylic resin.

When the connection loss was measured at the connection point, the measured value was 0.2 dB or less. This proved sufficient utility of this structure as an optical connection structure.

### Example 3

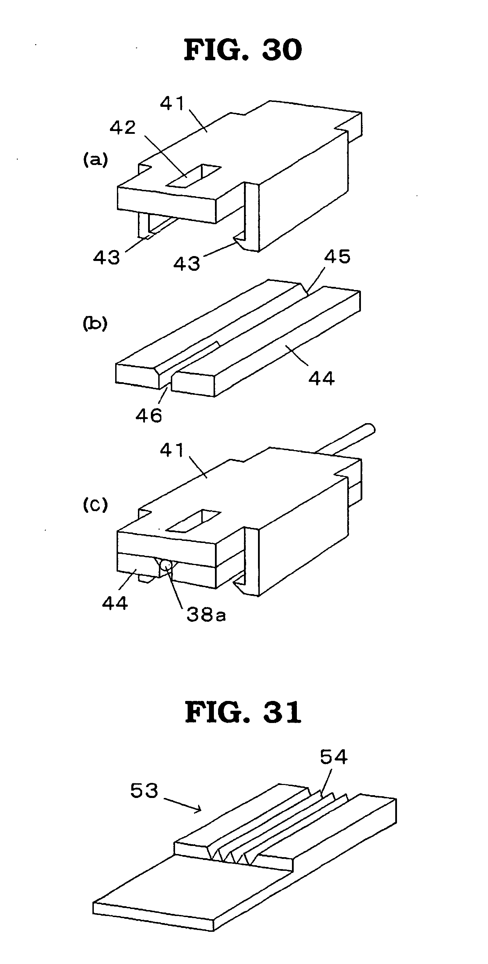

A connection member base (41) (size: 5 mm x 12 mm x 2.5 mm) that has an acrylic resin latch (43) having a rectangular through hole (42) of 1 mm x 3 mm, as shown in Fig. 30 (a), and an optical fiber storage plate (44) that has a V-groove (45) and an opening (46) of 7 mm in length and 0.2 mm in width on one end, as shown in Fig. 30 (b), were prepared. Next, the bare optical fiber (38a) of a coated optical fiber that had been stripped and cut in the same manner as in Example 2 was installed inside the V-groove (45) in the optical fiber storage plate (44), after which the optical fiber storage plate (44) was affixed to the connection member base (41) using adhesive to fabricate a connection member having the structure shown in Fig. 30 (c). On the other hand, an alignment member (size: 5 mm 28 mm x 3 mm) that has a latch engagement part having a V-shaped alignment groove, with its cross-section shaped to an equilateral triangle cross-section where the length of one side is 0.26 mm, was prepared. A coated optical fiber that had been stripped and cut was installed on this alignment member. Thereafter, a pressure member similar to the one used in Example 2 was used to connect the bare optical fibers to form an optical connection structure conforming to the present invention.

The obtained optical connection structure was formed by installing the connection member from above, so the work space required on the board could be reduced. Also, because the optical fiber was stored in the storage groove, when the connection member was installed to the alignment member the optical fiber did not sustain damage. In addition, use of an optical fiber storage plate having a V-groove enabled the bare optical fibers to be connected easily by placing them inside the alignment groove having the same opening width specified in Example 1. Furthermore, it was found that the desired processing and positioning effects would be sufficiently achieved even with a resin subject to large heat shrinkage/deformation, such as acrylic resin.

When the connection loss was measured at the connection point, the measured value was 0.3 dB or less. This proved sufficient utility of this structure as an optical connection structure.

### Example 4

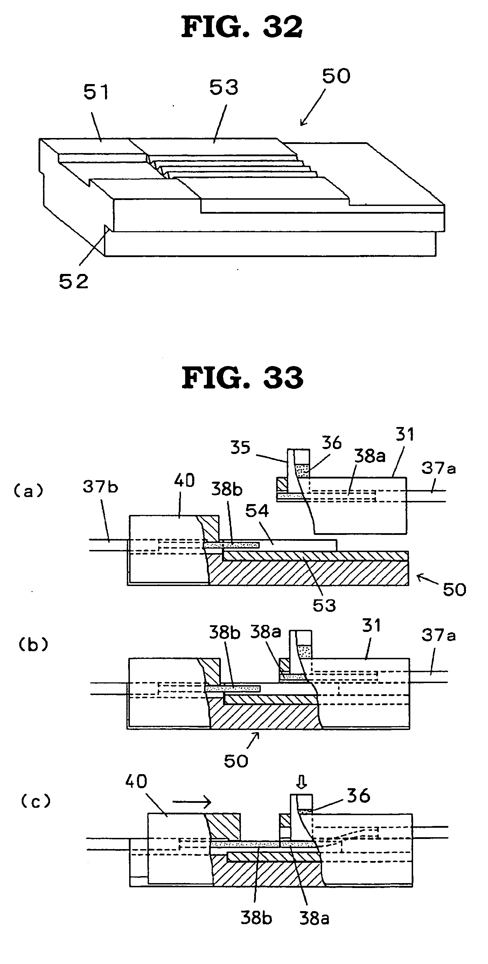

A connection member and a pressure member were fabricated in the same manner as in Example 2. On the other hand, a four-core plastic V-groove base (53) (250 µm, ∅ single mode type; manufactured by Nisshin Kasei) comprising an acrylic resin base (51) with a latch engagement part (52) and alignment grooves (54) with a 5 mm x 10 mm V-shaped cross-section processed in the base, as shown in Fig. 31, was used as the alignment member (50) (Fig. 32). In the connection of bare optical fibers, only one of the four alignment grooves was used.

The connection was made in the same manner as in Example 2, using the aforementioned connection member, pressure member and alignment member. Specifically, a coated optical fiber (37b) that had been stripped and cut in the same manner as in Example 2 was placed inside an alignment groove (54) in the alignment member (50), and then affixed using an affixing member (40) having a latch of the same structure used on the aforementioned connection member (Fig. 33 (a)). Next, the connection member (31) on which another coated optical fiber (37a) was placed was placed on the alignment member (50) (Fig. 33 (b)). Thereafter, a load was applied in the downward direction using the pressure jig (35). This caused the urethane foam resin (36) to deform, which then caused the bare optical fiber (38a) to be pushed into the alignment groove, eventually aligning, inside the alignment groove, the cross-section of the bare optical fiber (38a) installed on the connection member (31) with the bare optical fiber (38b) placed inside the alignment groove in the alignment member. Next, the affixing member (40) was moved to butt-connect the bare optical fibers (38a, 38b), thus forming an optical connection structure conforming to the present invention (Fig. 33 (c)).

The obtained optical connection structure was formed by installing the connection member from above, so the work space required on the board could be reduced. Also, because the optical fiber was stored in the storage groove, when the connection member was installed to the alignment member the optical fiber did not sustain damage. Furthermore, it was found that the desired processing and positioning effects would be sufficiently achieved even with a resin subject to large heat shrinkage/deformation, such as acrylic resin.

When the connection loss was measured at the connection point, the measured value was 0.2 dB or less. This proved sufficient utility of this structure as an optical connection structure.

### Example 5

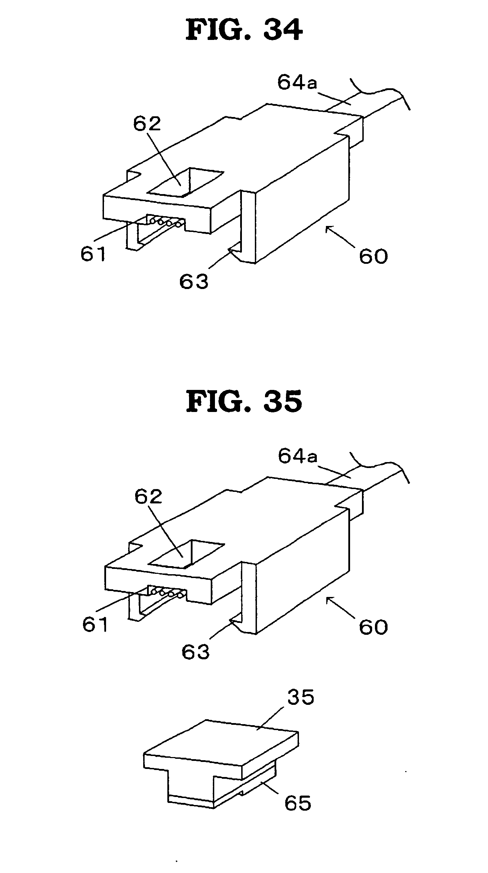

A pressure member and an alignment member fabricated in the same manner as in Example 4 were used, except that a connection member (60) (size: 5 mm x 12 mmx 2.5 mm) that has a rectangular storage groove (61) with a cross-section of 1.1 mm x 0.27 mm, and an acrylic resin latch (63) having a rectangular through hole (62) of 1 mm x 3 mm running through the storage groove, as shown in Fig. 34, was used. The cover of a four-core optical fiber tape (manufactured by Furukawa Electric; diameter 250 µm) was stripped by 15 mm from one end, and the bare optical fibers were cut at 10 mm from the end of the cover. The four-core optical fiber tape (64a) was placed inside the storage groove in the connection member, and the cover of the optical fiber tape was affixed to the connection member using acrylic adhesive.

The connection was made in the same manner as in Example 2, except that the four-core optical fiber tape was installed to the alignment member using an affixing member, to form an optical connection structure conforming to the present invention.

The obtained optical connection structure was formed by installing the connection member from above, so the work space required on the board could be reduced. Also, because the optical fiber was stored in the storage groove, when the connection member was installed to the alignment member the optical fiber did not sustain damage. Furthermore, it was found that the desired processing and positioning effects would be sufficiently achieved even with a resin subject to large heat shrinkage/deformation, such as acrylic resin.

When the connection loss was measured at the connection point, the average loss of four cores was 0.2 dB or less. This proved sufficient utility of this structure as an optical connection structure for multi-core optical fibers.

### Example 6

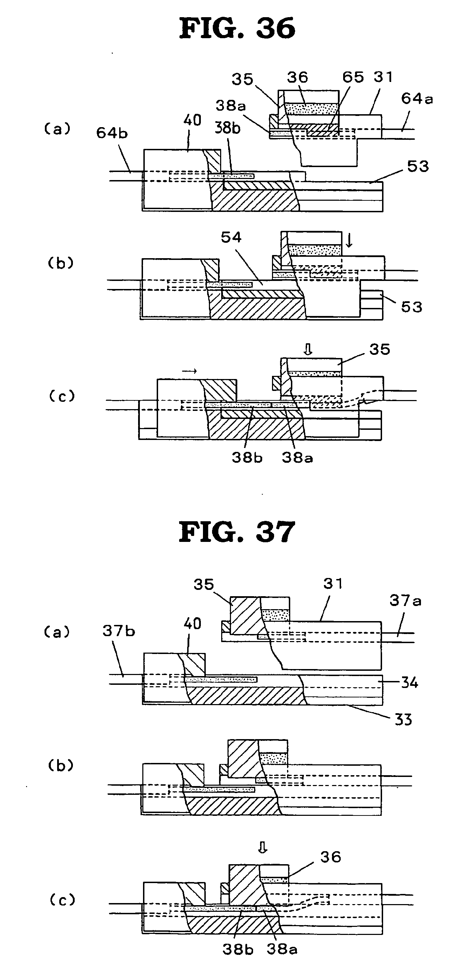

As shown in Fig. 35, a four-core plastic V-groove base (65) that has V-grooves with a V-shaped cross-section-one similar to the structure shown in Fig. 31-was affixed with adhesive to a pressure part at the bottom of a pressure member (35). Also, an alignment member with a bare optical fiber placed on top, similar to one in Example 5, was prepared. The connection was made in the same manner as in Example 5, except that, at the time of connection, each bare optical fiber was pushed into the alignment groove (54) in the alignment member using a plastic V-groove base provided at the bottom of the pressure member. Fig. 36 shows the connection steps. First, a bare optical fiber (38a) of a four-core optical fiber tape (64a) was installed in a V-groove in the four-core plastic V-groove base (65) affixed at the bottom of the aforementioned pressure jig (35) which was inserted into the through hole in the connection member (31) (Fig. 36 (a)). Next, the connection member was placed on the alignment member from above (Fig. 36 (b)). Thereafter, a load was applied in the downward direction using the pressure jig (35). This caused the urethane foam resin (36) to deform, which then caused the bare optical fiber (38a) to be pushed into the alignment groove (54) provided in the four-core plastic V-groove base (53) on the alignment member, eventually aligning, inside the alignment grooves, the cross-sections of the bare optical fiber (38a) installed to the connection member (31) with another bare optical fiber (38b) of a four-core optical fiber tape (64b) installed inside the alignment groove in the alignment member. Next, the affixing member (40) was moved to butt-connect the bare optical fibers (38a, 38b), thus forming an optical connection structure conforming to the present invention (Fig. 36 (c)).

The obtained optical connection structure was formed by installing the connection member from above, so the work space required on the board could be reduced. Also, because each optical fiber was stored in the storage groove, when the connection member was bonded to the alignment member the optical fiber did not sustain damage. In addition, because the bare optical fiber was installed on the plastic V-groove base provided at the bottom of the pressure member, the pitch of the bare optical fibers matched that of the alignment grooves, thus making it possible to safely push a multi-core optical fiber into the alignment grooves. Furthermore, it was found that the desired processing and positioning effects would be sufficiently achieved even with a resin subject to large heat shrinkage/deformation, such as acrylic resin.

When the connection loss was measured at the connection point, the average loss of four cores was 0.2 dB or less. This proved sufficient utility of this structure as an optical connection structure for multi-core optical fibers.

### Example 7

The same operation described in Example 2 was repeated, except that one optical fiber installed to the connection member was pushed into the alignment groove in the alignment member, while the other coated optical fiber was affixed inside the alignment groove, using a pressure member (35) equipped with a pressure part at its bottom that is shaped to an appropriate size so that both of the inter-connected optical fibers can be affixed in the alignment groove, as shown in Fig. 37. Fig. 37 shows the connection steps. Specifically, a coated optical fiber (37a) that had been stripped and cut was affixed inside the storage groove in the connection member (31). On the other hand, another coated optical fiber (37b) that had been stripped and cut was placed inside the alignment groove (34) in the alignment member (33) and affixed using an affixing member (40) (Fig. 37 (a)). Next, the bare optical fiber (38b) of the coated optical fiber (37b) placed inside the alignment groove (34) in the alignment member (33) was aligned with the bare optical fiber (38a) of the coated optical fiber (37a) stored inside the storage groove in the connection member (31), and the connection member (31) was placed in the alignment member (33) (Fig. 37 (b)). Thereafter, a load was applied in the downward direction using the pressure jig (35), while at the same time the bare optical fiber (38b) placed inside the alignment groove in the alignment member was butt-connected. This caused the urethane foam resin (36) to deform, which then caused the bare optical fiber (38a) to be pushed into the alignment groove, eventually allowing the bare optical fibers (38a, 38b) to be butt-connected to each other inside the alignment groove, and thus forming an optical connection structure conforming to the present invention (Fig. 37 (c)).

The obtained optical connection structure was formed by installing the connection member from above, so the work space required on the board could be reduced. Also, because each optical fiber was stored in the storage groove, when the connection member was installed to the alignment member the optical fiber did not sustain damage. Furthermore, it was found that the desired processing and positioning effects would be sufficiently achieved even with a resin subject to large heat shrinkage/deformation, such as acrylic resin.

When the connection loss was measured at the connection point, the measured value was 0.2 dB or less. This proved sufficient utility of this structure as an optical connection structure for multi-core optical fibers.

### Example 8

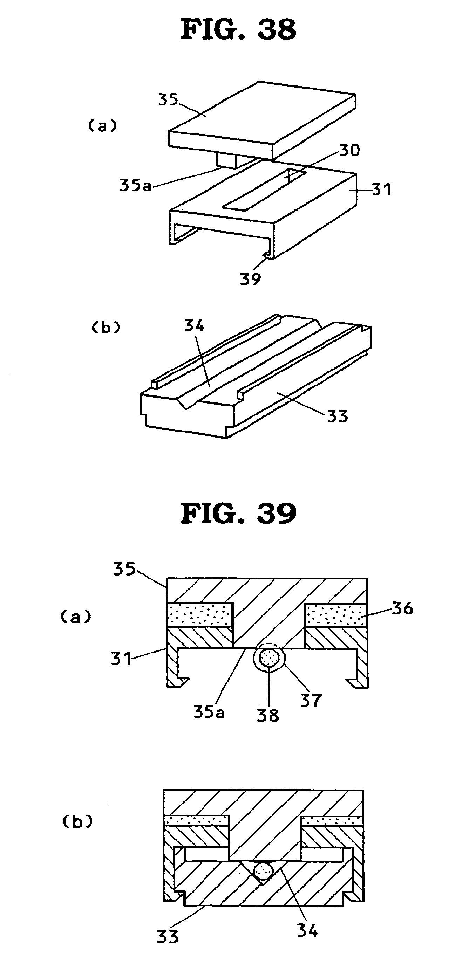

Two units of a connection member (31) (size: 5 mm x 12 mm x 3 mm) that has an ABS resin latch (39) having a rectangular through hole (30) of 1 mm x 8 mm running from top to bottom, as shown in Fig. 38 (a), two units of a pressure jig (35) having silicone rubber with a thickness of 1 mm attached at its convex edge (35a), also shown in Fig. 38 (a), and one alignment member (33) (size: 5 mm x 28 mm x 3 mm) that has a V-shaped alignment groove (34) with an equilateral triangle cross-section where the length of one side is 0.3 mm, as shown in Fig. 38 (b), were prepared.

Then, as shown in Fig. 39 (a), the pressure jig (35) was inserted into the rectangular through hole in the connection member (31), and then affixed to the connection member (31) using an urethane foam resin (36) to form an optical transmission connection member. Thereafter, the cover of each coated optical fiber (37) (manufactured by Furukawa Electric; diameter 250 µm) was stripped by 15 mm from one end, and the bare optical fiber (38) (diameter 125 µm) was cut at 10 mm from the end of the cover. Each coated optical fiber (37) was placed on the connection member (31), and then affixed to the concave end (35a) of the pressure jig (35) using silicone adhesive.

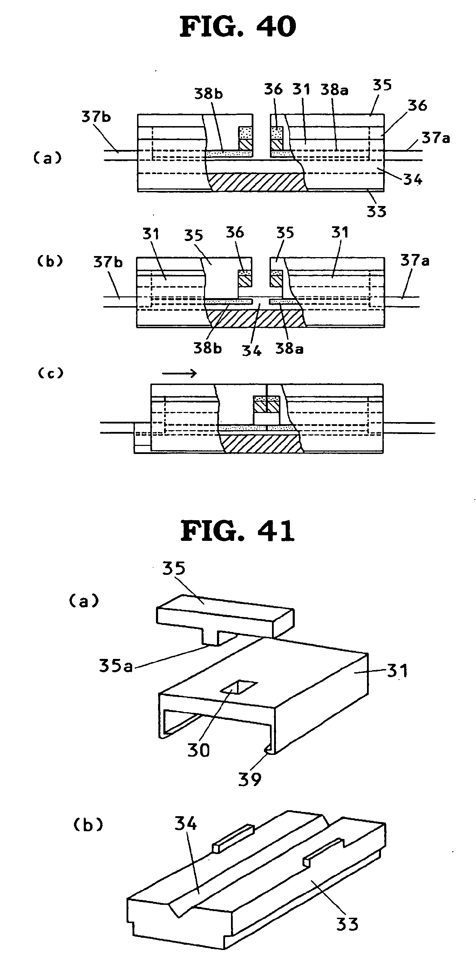

The connection was made as follows. As shown in Fig. 40, the coated optical fibers (37a, 37b), which were placed in the alignment groove (34) in the alignment member (33) and on the aforementioned connection members (31), and affixed by the pressure jig, were positioned and installed to the alignment member (33) (Fig. 40 (a)). Next, a load was applied in the downward direction using the pressure jig (35). This caused the urethane foam resin (36) to deform, which then caused both of the coated optical fibers (37a, 37b) and bare optical fibers (38a, 38b) to be pushed into the alignment groove (34) (Fig. 39 (b)), eventually aligning the cross-sections of the bare optical fibers installed to the two connection members (31) (Fig. 40 (b)). Next, the two connection members were butt-connected to also butt-connect the bare optical fibers (38a, 38b), thereby forming an optical connection structure conforming to the present invention (Fig. 40 (c)).

The obtained optical connection structure was formed by installing the connection members from above, so the work space required on the board could be reduced. Furthermore, it was found that the desired processing and positioning effects would be sufficiently achieved even with a resin subject to large heat shrinkage/deformation, such as ABS resin.

When the connection loss was measured at the connection point, the measured value was 0.2 dB or less. This proved sufficient utility of this structure as an optical connection structure.

### Example 9

One connection member (31) (size: 5 mm x 12 mm x 3 mm) that has an optical transmission medium storage groove with a cross-section of 0.26 mm x 0.26 mm (not shown in the figure) and an ABS resin latch (39) having a rectangular through hole (30) of 1 mm x 3 mm running from top to bottom, as shown in Fig. 41 (a), one pressure jig (35) having silicone rubber with a thickness of 1 mm attached at its convex edge, also shown in Fig. 41 (a), and one alignment member (33) (size: 5 mm x 28 mm x 3 mm) that has a V-shaped alignment groove (34) with an equilateral triangle cross-section where the length of one side is 0.3 mm, as shown in Fig. 41 (b), were prepared. The connection member (31) and pressure jig (35) were affixed using urethane foam resin (36). Then, the cover of a coated optical fiber (manufactured by Furukawa Electric; diameter 250 µm) was stripped by 15 mm from one end, and the bare optical fiber (diameter 125 µm) was cut at 10 mm from the end of the cover. The optical fiber was then placed inside the optical transmission medium storage groove in the connection member, and the cover of the optical fiber core was affixed to the storage groove in the connection member using acrylic adhesive.

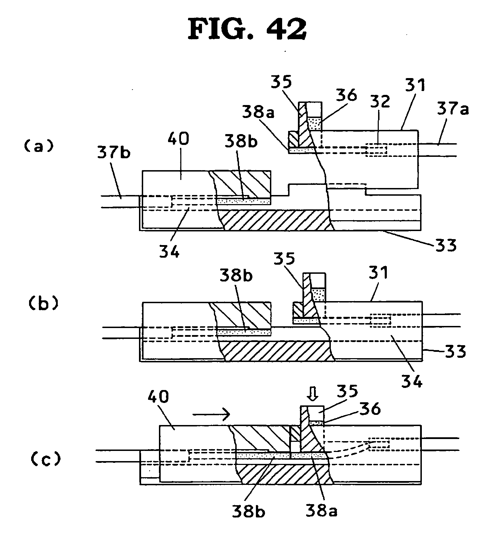

The connection was made as follows. As shown in Fig. 42, the coated optical fiber (37b) that had been stripped and cut was placed inside the alignment groove (34) in the alignment member (33) in the same manner as explained above, and affixed using an affixing member (40) having a latch structure similar to the one on the aforementioned connection member (Fig. 42 (a)). Specifically, one part of the optical fiber core was bonded to the affixing member using adhesive. Next, the alignment groove (34) in the alignment member (33) was aligned with the optical fiber (37a) placed and affixed inside the storage groove (32) in the aforementioned connection member (31), and then installed to the alignment member (33) (Fig. 42 (b)). Thereafter, a load was applied to the bare optical fiber (38a) in the downward direction using the pressure jig (35). This caused the urethane foam resin (36) to deform, which then caused the bare optical fiber (38a) to be pushed into the alignment groove, eventually aligning, inside the alignment groove, the cross-section of the bare optical fiber (38a) installed to the connection member (31) with another bare optical fiber (38b) placed inside the alignment groove in the alignment member. Next, the affixing member (40) was moved to butt-connect the bare optical fibers (38a, 38b), thus forming an optical connection structure conforming to the present invention (Fig. 42 (c)).

The obtained optical connection structure was formed by installing the connection member from above, so the work space required on the board could be reduced. Furthermore, it was found that the desired processing and positioning effects would be sufficiently achieved even with a resin subject to large heat shrinkage/deformation, such as ABS resin.

When the connection loss was measured at the connection point, the measured value was 0.2 dB or less. This proved sufficient utility of this structure as an optical connection structure.

### [Industrial Field of Application]

As explained above, the optical connection method proposed by the present invention is ideally suited for connecting a structure that houses an optical fiber leading out of an optical element, optical circuit package, optical circuit device, etc., on a printed circuit board or inside a device.

## Claims

1. A connection method for optical transmission media (1), comprising: a step to place an optical transmission medium (1a) on connection member (2); a step to arrange the connection member (2) on which the optical transmission medium (1a) is placed with an alignment member (4) having an alignment groove (5) in such a way that the optical transmission medium (1a) placed on said connection member (2) faces the opening of the alignment groove (5) in the alignment member (4); a step to move at least the end to be optically connected of said optical transmission medium (1a), into the alignment groove (5); and a step to butt-connect the end of the optical transmission medium (1a) in the alignment groove (5) to the end of another optical transmission medium (1b), wherein the aforementioned step to place an optical transmission medium (1a) on a connection member (2) is to store the optical transmission medium (1a) inside a storage groove (3) in the connection member (2); and the aforementioned step to move at least the end to be optically connected of said optical transmission medium (1a), into the alignment groove (5) is to move at least the end to be optically connected of the optical transmission medium (1a), from said storage groove (3) into the alignment groove (5),
which is **characterized in that** the optical transmission media (1) is moved using a pressure member (7) in the step to move at least the end to be optically connected of the optical transmission medium (1a), from the storage groove (3) into the alignment groove (5),
wherein the connection member (2) has a through hole (6) or cutout (9) that opens to the part where an optical transmission medium (1a) is placed; and a pressure member (7) for pressuring the optical transmission medium (1a) is inserted into said through hole (6) or cutout (9).

2. The connection method for optical transmission media (1) as described in Claim 1, which is **characterized in that** the optical transmission medium (1a) placed on the connection member (2) is an optical fiber.

3. The connection method for optical transmission media (1) as described in Claim 1, which is **characterized in that** another optical transmission medium (1b) to be butt-connected is an optical fiber, rod lens or optical waveguide.

4. The connection method for optical transmission media as described in Claim 1, which is **characterized in that** the aforementioned connection member (2) has a storage groove (3) for storing an optical transmission medium (1a) so as not to expose substantially an end of the optical transmission medium (1a) and a through hole (6) or cutout (9) opens to said storage groove (3).

5. The connection method for optical transmission media as described in Claim 4, which is **characterized in that** the connection member (2) comprises a base having the through hole (6) or cutout (9) into which the pressure member (7) is inserted, and a storage plate having the storage groove (3) into which the optical transmission medium (1a) is placed; and that said storage groove (3) has an opening on one end that allows the optical transmission medium (1a) to move via the pressure from the pressure member (7).

6. The connection method for optical transmission media as described in Claim 1, which is **characterized in that** a storage plate having a groove into which an optical transmission medium (1a) is stored is affixed to the pressure surface of the pressure member (7).

7. An optical connection structure (10), comprising: an alignment member (4) having an alignment groove (5); a connection member (2) on which an optical transmission medium (1a) is placed in such a way that the optical transmission medium (1a) faces the opening of said alignment groove (5); said optical transmission medium (1a), wherein at least the end to be optically connected is stored inside said alignment groove (5) in the alignment member (4); and another optical transmission medium (1b) optically connected to said optical transmission medium (1a); wherein the end of the optical transmission medium (1a) inserted into the alignment groove (5) is butt-connected to the end of another optical transmission medium (1b) inside the alignment groove (5) or at the end of the alignment groove (5), the aforementioned connection member (2) has a storage grooves (3) for placing an optical transmission medium (1a),
which is **characterized in that** the aforementioned connection member (2) has a pressure member (7), and **in that** the connection member (2) having a storage groove (3) has a through hole (6) or cutout (9) that opens to the storage groove (3), adapted for inserting the pressure member (7) into said through hole (6) or cutout (9), and for moving at least the end to be optically connected of the optical transmission medium (1a) into the alignment groove (5) by said pressure member (7).

8. The connection structure (10) for optical transmission media (1) as described in Claim 7, which comprises multiple alignment grooves (5) and multiple storage grooves (3).

9. The optical connection structure (10) as described in Claim 7, which is **characterized in that** the opening width of the alignment groove (5) is greater than the opening width of the storage groove (3).

10. The optical connection structure (10) as described in Claim 7, which is **characterized in that** the optical transmission medium (1a) that is moved into the alignment groove (5) is an optical fiber, and another optical transmission medium (1b) to be butt-connected is an optical fiber, rod lens or optical waveguide.

11. The optical connection structure (10) as described in Claim 7, which is **characterized in that** the alignment member (4) having an alignment groove (5) is installed and affixed on a printed circuit board, and another optical transmission medium (1b) to be butt-connected to the end of the optical transmission medium (1a) that has been moved into said alignment groove (5) is formed on the surface of, or inside, a base installed and affixed on said printed circuit board.

12. An optical circuit component to which multiple optical devices are connected via an optical transmission medium (1a), which is **characterized in that** the connection part of said optical devices and said optical transmission medium (1a) comprises the optical connection structure (10) described in Claim 7.

## Patentansprüche

1. Verbindungsverfahren für optische Übertragungsmedien (1), das aufweist: einen Schritt des Anordnens eines optischen Übertragungsmediums (1a) an einem Verbindungselement (2); einen Schritt des Anordnens des Verbindungselements (2), an dem das optische Übertragungsmedium (1a) angeordnet wird, mit einem Ausrichtungselement (4), das eine Ausrichtungsnut (5) aufweist, in einer solchen Weise, dass das am Verbindungselement (2) angeordnete optische Übertragungsmedium (1a) der Öffnung der Ausrichtungsnut (5) im Ausrichtungselement (4) gegenüberliegt; einen Schritt des Bewegens mindestens des optisch zu verbindenden Endes des optischen Übertragungsmediums (1a) in die Ausrichtungsnut (5); und einen Schritt des Stumpfverbindens des Endes des optischen Übertragungsmediums (1a) in der Ausrichtungsnut (5) mit dem Ende eines anderen optischen Übertragungsmediums (1b), wobei der oben erwähnte Schritt des Anordnens eines optischen Übertragungsmediums (1a) an einem Verbindungselement (2) das Lagern des optischen Übertragungsmediums (1a) in einer Lagernut (3) im Verbindungselement (2) ist; und der oben erwähnte Schritt des Bewegens mindestens des optisch zu verbindenden Endes des optischen Übertragungsmediums (1a) in die Ausrichtungsnut (5) das Bewegen mindestens des optisch zu verbindenden Endes des optischen Übertragungsmediums (1a) aus der Lagernut (3) in die Ausrichtungsnut (5) ist,
**dadurch gekennzeichnet, dass** das optische Übertragungsmedium (1) im Schritt des Bewegens mindestens des optisch zu verbindenden Endes des optischen Übertragungsmediums (1a) aus der Lagernut (3) in die Ausrichtungsnut (5) mittels eines Druckelements (7) bewegt wird, wobei das Verbindungselement (2) ein Durchgangsloch (6) aufweist oder einen Ausschnitt (9), das/der sich zu dem Teil öffnet, wo ein optisches Übertragungsmedium (1a) angeordnet ist; und ein Druckelement (7) zum Drücken des optischen Übertragungsmediums (1a) in das Durchgangsloch (6) oder den Ausschnitt (9) eingeführt wird.

2. Verbindungsverfahren für optische Übertragungsmedien (1) nach Anspruch 1, **dadurch gekennzeichnet, dass** das optische Übertragungsmedium (1a), das am Verbindungselement (2) angeordnet wird, eine optische Faser ist.

3. Verbindungsverfahren für optische Übertragungsmedien (1) nach Anspruch 1, **dadurch gekennzeichnet, dass** ein anderes stumpf zu verbindendes optisches Übertragungsmedium (1b) eine optische Faser, eine Stablinse oder ein optischer Wellenleiter ist.

4. Verbindungsverfahren für optische Übertragungsmedien nach Anspruch 1, **dadurch gekennzeichnet, dass** das oben erwähnte Verbindungselement (2) eine Lagernut (3) zum Lagern eines optischen Übertragungsmediums (1a) aufweist, so dass im wesentlichen kein Ende des optischen Übertragungsmediums (1a) freiliegt, und sich ein Durchgangsloch (6) oder ein Ausschnitt (9) zur Lagernut (3) öffnet.

5. Verbindungsverfahren für optische Übertragungsmedien nach Anspruch 4, **dadurch gekennzeichnet, dass** das Verbindungselement (2) eine Basis mit dem Durchgangsloch (6) oder Ausschnitt (9), in das/den das Druckelement (7) eingeführt wird, und eine Lagerplatte mit der Lagernut (3), in dem das optische Übertragungsmedium (1a) angeordnet wird, umfasst; und dass die Lagernut (3) eine Öffnung an einem Ende aufweist, die das Bewegen des optischen Übertragungsmediums (1a) über den Druck vom Druckelement (7) ermöglicht.

6. Verbindungsverfahren für optische Übertragungsmedien nach Anspruch 1, **dadurch gekennzeichnet, dass** eine Lagerplatte mit einer Nut, in der ein optisches Übertragungsmedium (1a) gelagert wird, an der Druckfläche des Druckelements (7) befestigt wird.

7. Optische Verbindungsstruktur (10), die aufweist: ein Ausrichtungselement (4) mit einer Ausrichtungsnut (5); ein Verbindungselement (2), an dem das optische Übertragungsmedium (1a) in einer solchen Weise angeordnet ist, dass das optische Übertragungsmedium (1a) der Öffnung der Ausrichtungsnut (5) gegenüberliegt; das optische Übertragungsmedium (1a), wobei mindestens das optisch zu verbindende Ende innerhalb der Ausrichtungsnut (5) im Ausrichtungselement (4) gelagert ist; und ein anderes optisches Übertragungsmedium (1b), das mit dem optischen Übertragungsmedium (1a) optisch verbunden ist; wobei das in die Ausrichtungsnut (5) eingeführte Ende des optischen Übertragungsmediums (1a) mit dem Ende des anderen optischen Übertragungsmediums (1b) innerhalb der Ausrichtungsnut (5) oder am Ende der Ausrichtungsnut (5) stumpf verbunden ist, und das oben erwähnte Verbindungselement (2) eine Lagernut (3) zur Anordnung eines optischen Übertragungsmediums (1a) aufweist,
**dadurch gekennzeichnet, dass** das oben erwähnte Verbindungselement (2) ein Druckelement (7) aufweist, und dass das Verbindungselement (2) mit einer Lagernut (3) ein Durchgangsloch (6) oder einen Ausschnitt (9) aufweist, das/der sich zur Lagernut (3) öffnet, eingerichtet zur Einführung des Druckelements (7) in das Durchgangsloch (6) oder den Ausschnitt (9) und zum Bewegen mindestens des optisch zu verbindenden Endes des optischen Übertragungsmediums (1a), in die Ausrichtungsnut (5) durch das Druckelement (7).

8. Verbindungsstruktur (10) für optische Übertragungsmedien (1) nach Anspruch 7, die mehrere Ausrichtungsnuten (5) und mehrere Lagernuten (3) aufweist.

9. Optische Verbindungsstruktur (10) nach Anspruch 7, **dadurch gekennzeichnet, dass** die Öffnungsweite der Ausrichtungsnut (5) größer als die Öffnungsweite der Lagernut (3) ist.

10. Optische Verbindungsstruktur (10) nach Anspruch 7, **dadurch gekennzeichnet, dass** das optische Übertragungsmedium (1a), das in die Ausrichtungsnut (5) bewegt wird, eine optische Faser ist, und ein anderes stumpf zu verbindendes optisches Übertragungsmedium (1b) eine optische Faser, eine Stablinse oder ein optischer Wellenleiter ist.

11. Optische Verbindungsstruktur (10) nach Anspruch 7, **dadurch gekennzeichnet, dass** das Ausrichtungselement (4), das eine Ausrichtungsnut (5) aufweist, auf einer gedruckten Schaltung angebracht und befestigt ist, und ein anderes optisches Übertragungsmedium (1b), das mit dem Ende des optischen Übertragungsmediums (1a), das in die Ausrichtungsnut (5) bewegt worden ist, stumpf verbunden werden soll, auf der Oberfläche oder innerhalb einer Basis, die auf der gedruckten Schaltung angebracht und befestigt ist, ausgebildet ist.

12. Optische Schaltungskomponente mit der mehrere optische Vorrichtungen über ein optisches Übertragungsmedium (1a) verbunden sind, **dadurch gekennzeichnet, dass** der Verbindungsteil der optischen Vorrichtungen und das optische Übertragungsmedium (1a) die optische Verbindungsstruktur (10) nach Anspruch 7 aufweist.

## Revendications

1. Procédé de connexion pour un support de transmission optique (1), comprenant : une étape qui consiste à placer un support de transmission optique (1a) sur un élément de connexion (2); une étape qui consiste à agencer l'élément de connexion (2) sur lequel le support de transmission optique (1a) est placé avec un élément d'alignement (4) ayant une rainure d'alignement (5) de manière que le support de transmission optique (1a) placé sur ledit élément de connexion (2) regarde l'ouverture de la rainure d'alignement (5) dans l'élément d'alignement (4); une étape qui consiste à déplacer au moins l'extrémité, qui doit être optiquement reliée, dudit support de transmission optique (1a) dans la rainure d'alignement (5); et une étape qui consiste à relier bout à bout l'extrémité du support de transmission optique (1a) dans la rainure d'alignement (5) à l'extrémité d'un autre support de transmission optique (1b), où l'étape susmentionnée de déplacement d'un support de transmission optique (1a) sur un élément de connexion (2) consiste à stocker le support de transmission optique (1a) à l'intérieur d'une rainure de stockage (3) dans l'élément de connexion (2); et l'étape susmentionnée de déplacement d'au moins l'extrémité, qui doit être optiquement reliée, dudit support de transmission optique (1a), dans la rainure d'alignement (5) consiste à déplacer au moins l'extrémité, qui doit être optiquement reliée, du support de transmission optique (1a), à partir de la rainure de stockage (3) dans la rainure d'alignement (5), qui est **caractérisé en ce que** le support de transmission optique (1a) est déplacé en utilisant un élément de pression (7) à l'étape de déplacement d'au moins l'extrémité, qui doit être optiquement reliée, du support de transmission optique (1a), à partir de la rainure de stockage (3) dans la rainure d'alignement (5),
dans lequel l'élément de connexion (2) possède un trou traversant (6) ou une découpe (9) qui s'ouvre sur la partie où un support de transmission optique (1a) est placé ; et un élément de pression (7) destiné à exercer une pression sur le support de transmission optique (1a) est inséré dans ledit trou traversant (6) ou ladite découpe (9).

2. Procédé de connexion pour un support de transmission optique (1) selon la revendication 1, qui est **caractérisé en ce que** le support de transmission optique (1a) placé sur l'élément de connexion (2) est une fibre optique.

3. Procédé de connexion pour un support de transmission optique (1) selon la revendication 1, qui est **caractérisé en ce qu'**un autre support de transmission optique (1b), qui doit être relié bout à bout, est une fibre optique, une lentille barreau ou un guide d'ondes optique.

4. Procédé de connexion pour un support de transmission optique selon la revendication 1, qui est **caractérisé en ce que** l'élément de connexion (2) susmentionné possède une rainure de stockage (3) pour stocker un support de transmission optique (1a) de sorte qu'une extrémité du support de transmission optique (1a) ne soit pas essentiellement exposée et qu'un trou traversant (6) ou une découpe (9) s'ouvre à ladite rainure de stockage (3).

5. Procédé de connexion pour un support de transmission optique selon la revendication 4, qui est **caractérisé en ce que** l'élément de connexion (2) comprend une base ayant le trou traversant (6) ou la découpe (9) où l'élément de pression (7) est inséré; et une plaque de stockage ayant la rainure de stockage (3) dans laquelle le support de transmission optique (1a) est placé ; et **en ce que** ladite rainure de stockage (3) possède une ouverture sur une extrémité qui permet au support de transmission optique (1a) de se déplacer par la pression appliquée par ledit élément de pression (7).

6. Procédé de connexion pour un support de transmission optique selon la revendication 1, qui est **caractérisé en ce qu'**une plaque de stockage ayant une rainure, dans laquelle un support de transmission optique (1a) est stocké, est affixée à la surface de pression de l'élément de pression (7).

7. Structure de connexion optique (10) comprenant : un élément d'alignement (4) ayant une rainure d'alignement (5); un élément de connexion (2) sur lequel un support de transmission optique (1a) est placé de sorte que le support de transmission optique (1a) soit en face de l'ouverture de ladite rainure d'alignement (5); ledit support de transmission optique (1a), dans lequel au moins l'extrémité, qui doit être optiquement reliée, est stockée à l'intérieur de ladite rainure d'alignement (5) dans l'élément d'alignement (4); et un autre support de transmission optique (1b) optiquement relié audit support de transmission optique (la); où l'extrémité du support de transmission optique (1a) insérée dans la rainure d'alignement (5) est reliée bout à bout à l'extrémité d'un autre support de transmission optique (1b) à l'intérieur de la rainure d'alignement (5) ou au niveau de l'extrémité de la rainure d'alignement (5), l'élément de connexion (2) susmentionné possède une rainure de stockage (3) pour placer un support de transmission optique (1a), qui est **caractérisé en ce que** l'élément de connexion (2) susmentionné possède un élément de pression (7), et l'élément de connexion (2) ayant une rainure de stockage (3) possède un trou traversant (6) ou une découpe (9) qui s'ouvre sur la rainure de stockage (3), adaptée pour insérer l'élément de pression (7) dans ledit trou traversant (6) ou ladite découpe (9), et pour déplacer au moins l'extrémité, qui doit être optiquement reliée, du support de transmission optique (1a) dans la rainure d'alignement (5) par ledit élément de pression (7).

8. Structure de connexion optique (10) pour un support de transmission optique (1) selon la revendication 7, qui comprend plusieurs rainures d'alignement (5) et plusieurs rainures de stockage (3).

9. Structure de connexion optique (10) selon la revendication 7, qui est **caractérisée en ce que** la largeur d'ouverture de la rainure d'alignement (5) est supérieure à la largeur d'ouverture de la rainure de stockage (3).

10. Structure de connexion optique (10) selon la revendication 7, qui est **caractérisée en ce que** le support de transmission optique (1a) qui est déplacé dans la rainure d'alignement (5) est une fibre optique, et qu'un autre support de transmission optique (1b) qui doit être relié bout à bout est une fibre optique, une lentille barreau ou un guide d'ondes optique.

11. Structure de connexion optique (10) selon la revendication 7, qui est **caractérisée en ce que** l'élément de connexion (4) ayant une rainure d'alignement (5) est installé et affixé sur une carte de circuit imprimé, et qu'un autre support de transmission optique (1b) qui doit être relié bout à bout à l'extrémité du support de transmission optique (1a) qui a été déplacé dans ladite rainure d'alignement (5), est formé sur la surface d'une base installée et affixée sur ladite carte de circuit imprimé ou à l'intérieur de celle-ci.

12. Composant de circuit optique auquel une multitude de dispositifs optiques sont reliés à travers un support de transmission optique (1a), qui est **caractérisé en ce que** la partie de connexion desdits dispositifs optiques et dudit support de transmission optique (1a) comprend la structure de connexion optique (10) décrite dans la revendication 7.
